# EUROPEAN PATENT APPLICATION

(11) **EP 4 796 309 A1**
(43) Date of publication of application: **26.08.2026**
(21) Application number: 26157454.5
(22) Date of filing: 10.02.2026
(51) Int. Cl.: B32B 1/00, B32B 7/12, B32B 27/08, B32B 27/10, B32B 27/18, B32B 27/22, B32B 27/30, B32B 27/32, C08J 5/18, C08L 23/04, B32B 27/34, B32B 27/36, B32B 27/40

(54) **POUCH COMPRISING A FILM WITH A LAYERED STRUCTURE AND METHOD FOR PRODUCING THE SAME**

(30) Priority: 20.02.2025 EP 25382157; 24.07.2025 EP 25382768
(71) Applicant: SIG Services AG, 8212 Neuhausen am Rheinfall (CH)
(72) Inventor: Uribe Soto, Luis Fernando, 8700000 Santiago (CL); Perini Bortolo, Otávio, 13288-009 Vinhedo SP (BR); Santini Torres, Luis Alberto, 08210 Barberà del Vallès Barcelona (ES)
(74) Representative: Herzog IP Patentanwalts GmbH

(57) **Abstract**

A container for accommodating a product, wherein the container comprises
a. an interior volume,
b. a first sidewall comprising a film, wherein the film comprises a layered structure,
wherein a cross-sectional cut of the film comprises at least five layers, wherein the at least five layers are arranged in
A.] a layered sub-structure A comprising at least two layers,
B.] a layered sub-structure B comprising at least one layer, and
C.] a layered sub-structure C comprising at least two layers,
wherein
I. the layered sub-structure B is arranged between the layered sub-structure A and the layered sub-structure C, and
II. the layered sub-structure C is arranged closer to the interior volume of the container compared to the layered sub-structure A;
wherein a thickness A of the layered sub-structure A is less than or equal to a thickness C of the layered sub-structure C

## Description

### FIELD OF THE INVENTION

The present invention pertains to a container for accommodating a product, such as a liquid foodstuff. The invention also pertains to a method for making a film, wherein said film can be used to produce a container for accommodating a product. The invention further pertains to a method of producing a container for accommodating a product. The invention further pertains to a use of a film for producing a container for accommodating a product, as well as a use of a container for accommodating a product, such as a liquid foodstuff.

### BACKGROUND

Containers for accommodating a product, such as a liquid foodstuff, are well-known in the art. One example of such a container is a pouch (e.g., a spouted pouch), which is often also referred to as a stand-up pouch. Examples of such pouches are disclosed in US 2019224952 A1 and US 2011/0252745 A1, while US 2020/0122439 A1 discloses a laminate that can be used to produce a pouch. Prior art containers have several limitations, such as insufficient puncture resistance, insufficient resistance to damage when dropped, and insufficient gas barrier properties. These containers are generally also challenging to recycle.

### OBJECTS

An object of the present invention is to at least partially overcome at least one of the disadvantages encountered in the state of the art.

It is a further object of the invention to provide a container for accommodating a product, such as a liquid product, and preferably a liquid foodstuff.

It is a further object of the invention to provide a container for accommodating a product, wherein the container has an increased puncture resistance.

It is a further object of the invention to provide a container for accommodating a product, wherein the container has an increased resistance to damage when dropped, more preferably when the container is at least partially filled.

It is a further object of the invention to provide a container for accommodating a product, wherein the container has an increased resistance to thermal damage.

It is a further object of the invention to provide a container for accommodating a product, wherein the container can be sealed at lower temperatures.

It is a further object of the invention to provide a container for accommodating a product, wherein the container has a higher stiffness.

It is a further object of the invention to provide a container for accommodating a product, wherein the container has improved gas barrier properties.

It is a further object of the invention to provide a container for accommodating a product, wherein the container is easier to recycle.

It is a further object of the invention to provide a film that can be used to produce a container for accommodating a product, such as a liquid product, and preferably a liquid foodstuff.

It is a further object of the invention to provide a film that has an increased puncture resistance.

It is a further object of the invention to provide a film that has an increased strength.

It is a further object of the invention to provide a film that has an outer layer with an increased resistance to thermal damage.

It is a further object of the invention to provide a film with an outer layer that can be sealed at a lower temperature.

It is a further object of the invention to provide a film with a higher stiffness.

It is a further object of the invention to provide a film that has improved gas barrier properties.

It is a further object of the invention to provide a film that is easier to recycle.

It is a further object of the invention to provide a method for producing a film that has improved properties (e.g., increased puncture resistance, increased strength, increased resistance to thermal damage, lower sealing temperature, increased stiffness, improved gas barrier properties, easier to recycle).

It is a further object of the invention to provide a method for producing a container that has improved properties (e.g., increased puncture resistance, increased resistance to damage when dropped, increased resistance to thermal damage, lower sealing temperature, increased stiffness improved gas barrier properties, easier to recycle).

### PREFERRED EMBODIMENTS OF THE INVENTION

A contribution to at least partially fulfilling at least one of the above-mentioned objects is made by any of the embodiments of the invention.

A 1^{st} embodiment of the invention is a container for accommodating a product, wherein the container comprises
a. an interior volume adapted and arranged for accommodating the product,
b. a first sidewall, wherein the first sidewall comprises
   i. a first edge,
   ii. a first surface and a further surface, opposite the first surface, with the further surface facing the interior volume,
   iii. a film, wherein
      A. the film makes up at least 30 %, preferably at least 50 %, more preferably at least 70 %, and further preferably at least 90 % of a thickness of the first sidewall,
      B. the film comprises, more preferably consists of, a layered structure;
c. a further sidewall, opposite the first sidewall, wherein the further sidewall comprises a first edge connected to the first edge of the first sidewall;

wherein a cross-sectional cut of the layered structure comprises at least five layers, wherein the at least five layers are arranged in
   A.] a layered sub-structure A comprising at least two layers,
   B.] a layered sub-structure B comprising at least one layer, and
   C.] a layered sub-structure C comprising at least two layers,
   wherein
   I. the layered sub-structure B is arranged between the layered sub-structure A and the layered sub-structure C, and
   II. the layered sub-structure C is arranged closer to the interior volume of the container compared to the layered sub-structure A;
wherein
   the first sidewall comprises less than 20 wt-%, preferably less than 15 wt-%, more preferably less than 10 wt-%, and further preferably less than 5 wt-% paper, cardboard, or both.

In a preferred aspect of the 1^{st} embodiment, the container is a flexible container. In a preferred aspect of the 1^{st} embodiment, the product is a liquid product. In a preferred aspect of the 1^{st} embodiment, the product is a foodstuff, more preferably a liquid foodstuff. In a preferred aspect of the 1^{st} embodiment, the film comprises at least seven layers, more preferably at least nine layers. In another preferred aspect of the 1^{st} embodiment, the film consists of seven layers or nine layers. In a preferred aspect of the 1^{st} embodiment, the film and/or the layered structure, more preferably both, are unoriented. In a preferred aspect of the 1^{st} embodiment, at least one, more preferably all, of the following are unoriented: the layered sub-structure A, the layered sub-structure B, the layered sub-structure C.

In a preferred aspect of the 1^{st} embodiment, the film makes up at least 95 %, more preferably at least 99 % of the thickness of the first sidewall. In a preferred aspect of the 1^{st} embodiment, the film forms the first sidewall. In a preferred aspect of the 1^{st} embodiment, a thickness of the layered structure makes up at least 30 %, more preferably at least 50 %, even more preferably at least 70 %, and further preferably at least 90 % of the thickness of the film. In a preferred aspect of the 1^{st} embodiment, the thickness of the layered structure makes up at least 95 %, more preferably at least 99 % of the thickness of the film. In a preferred aspect of the 1^{st} embodiment, the thickness of the layered structure makes up at least 30 %, more preferably at least 50 %, even more preferably at least 70 %, and further preferably at least 90 % of the thickness of the first sidewall. In a preferred aspect of the 1^{st} embodiment, the thickness of the layered structure makes up at least 95 %, more preferably at least 99 % of the thickness of the first sidewall.

In a preferred aspect of the 1^{st} embodiment, the container comprises less than 20 wt-%, more preferably less than 15 wt-%, even more preferably less than 10 wt-%, and further preferably less than 5 wt-% paper, cardboard, or both. In a preferred aspect of the 1^{st} embodiment, at least one or all, more preferably all, of the following are substantially free of paper, cardboard, or both: the first sidewall, the container.

In one preferred aspect of the 1^{st} embodiment, the layered sub-structure A consists of two layers. In another preferred aspect of the 1^{st} embodiment, the layered sub-structure A comprises at least three layers. In yet another preferred aspect of the 1^{st} embodiment, the layered sub-structure A consists of three layers. In a preferred aspect of the 1^{st} embodiment, the layered sub-structure B comprises at least two layers, and more preferably comprises at least three layers. In a preferred aspect of the 1^{st} embodiment, the layered sub-structure B consists of three layers. In a preferred aspect of the 1^{st} embodiment, the layered sub-structure B comprises at least one layer, more preferably one layer (e.g., B2), that is adapted and arranged to function as a gas barrier. In a preferred aspect of the 1^{st} embodiment, the layered sub-structure B consists of three layers, with one layer (e.g., B2) of said three layers being adapted and arranged to function as a gas barrier and preferably two layers (e.g., B1, B3) of said three layers being adapted and arranged to function as adhesive layers. In a preferred aspect of the 1^{st} embodiment, the layered sub-structure C consists of two layers. In another preferred aspect of the 1^{st} embodiment, the layered sub-structure C comprises at least three layers. In yet another preferred aspect of the 1^{st} embodiment, the layered sub-structure C consists of three layers.

Many of the embodiments and/or preferred embodiments in this disclosure, such as the 2^{nd} to 67^{th} (preferred) embodiments, have a preferred aspect X and/or a preferred aspect Y.
A.] A preferred aspect X of any of said embodiments preferably applies to a layered structure that comprises at least nine layers, more preferably consists of nine layers. A preferred aspect X of any of said embodiments preferably applies to a layered structure that has a layered sub-structure A that comprises, more preferably consists of, the layers A1, A2, and A3. A preferred aspect X of any of said embodiments preferably applies to a layered structure that has a layered sub-structure C that comprises, more preferably consists of, the layers C1, C2, and C3.
B.] A preferred aspect Y of any of said embodiments preferably applies to a layered structure that comprises at least seven layers, more preferably consists of seven layers. A preferred aspect Y of any of said embodiments preferably applies to a layered structure that has a layered sub-structure A that does not comprise the layer A3. A preferred aspect Y of any of said embodiments preferably applies to a layered structure that has a layered sub-structure A that comprises, more preferably consists of, the layers A1 and A2. A preferred aspect Y of any of said embodiments preferably applies to a layered structure that has a layered sub-structure C that does not comprise the layer C2. A preferred aspect Y of any of said embodiments preferably applies to a layered structure that has a layered sub-structure C that comprises, more preferably consists of, the layers C1 and C3.

In a preferred embodiment of the container for accommodating a product, at least one or all of the following applies:
a. the layered sub-structure A comprises at least one polyolefin, preferably at least one polyethylene, more preferably at least one polyethylene selected from the group consisting of: at least one HDPE, at least one LDPE, at least one LLDPE, at least one mLLDPE, at least two thereof;
b. the layered sub-structure B comprises at least one or all of the following: a polyamide, an ethylene/vinyl alcohol copolymer (EVOH), a polyvinyl alcohol (PVOH), a polyvinylidene chloride (PVDC), wherein EVOH and PVOH are more preferred than PVDC, wherein EVOH is more preferred than PVOH;
c. the layered sub-structure C comprises at least one polyolefin, preferably at least one polyethylene, more preferably at least one polyethylene selected from the group consisting of: at least one HDPE, at least one LDPE, at least one LLDPE, at least one mLLDPE, at least two thereof.

This preferred embodiment is a 2^{nd} embodiment of the invention, that preferably depends on the 1^{st} embodiment of the invention.

In an aspect of the 2^{nd} embodiment, all possible combinations of the features a. to c. are preferred aspects of the embodiment. These combinations are *e.g.,* a; b; c; a+b; a+c; b+c; a+b+c. In a preferred aspect of the 2^{nd} embodiment, if a layered sub-structure A and/or a layered sub-structure C comprises "at least two thereof", the at least two components can be a combination, such as a blend. Additionally or alternatively, the at least two components may be arranged in separate layers of the layered sub-structure. In a preferred aspect of the 2^{nd} embodiment, the layered sub-structure A comprises at least one HDPE and at least one LDPE, more preferably at least one HDPE and at least one LLDPE. In a preferred aspect of the 2^{nd} embodiment, the layered sub-structure C comprises at least one HDPE and at least one LDPE, more preferably at least one HDPE and at least one LLDPE or at least one HDPE and at least one mLLDPE.
A 3^{rd} embodiment of the invention is a method for producing a film, comprising the step of
   I./ at least partially simultaneously extruding at least five layers to obtain a film that has a layered structure, wherein, in a cross-sectional cut of the film, the at least five layers are arranged in the following layered sub-structures of said layered structure, in this order:
      A. a layered sub-structure A comprising at least two layers A1 and A2, and optionally a layer A3, wherein
         i. the layer A1 comprises a polyolefin, preferably a polyethylene, more preferably an HDPE, with a density of a least 0.940 g/cm³, preferably at least 0.950 g/cm³, more preferably at least 0.955 g/cm³, and further preferably at least 0.960 g/cm³,
         ii. the layer A2 comprises a polyolefin, preferably a polyethylene, more preferably a LDPE, and further preferably an LLDPE, with a density of less than 0.940 g/cm³, preferably less than or equal to 0.935 g/cm³, more preferably less than or equal to 0.930 g/cm³, and further preferably less than or equal to 0.925 g/cm³,
         iii. the layer A3, if present, comprises a polyolefin, preferably a polyethylene, more preferably an HDPE, with a density of a least 0.940 g/cm³, preferably at least 0.950 g/cm³, more preferably at least 0.955 g/cm³, and further preferably at least 0.960 g/cm³;
      B. a layered sub-structure B comprising at least one layer, and wherein the layered sub-structure B comprises at least one or all of the following: a polyamide, an ethylene/vinyl alcohol copolymer (EVOH), a polyvinyl alcohol (PVOH), a polyvinylidene chloride (PVDC), wherein EVOH and PVOH are more preferred than PVDC, wherein EVOH is more preferred than PVOH;
      C. a layered sub-structure C comprising at least two layers C1 and C3, and optionally a layer C2, wherein
         i. the layer C1 comprises a polyolefin, preferably a polyethylene, more preferably an HDPE, with a density of a least 0.940 g/cm³, preferably at least 0.950 g/cm³, more preferably at least 0.955 g/cm³, and further preferably at least 0.960 g/cm³,
         ii. the layer C2, if present, comprises a polyolefin, preferably a polyethylene, more preferably a LDPE, and further preferably an LLDPE, with a density of less than 0.940 g/cm³, preferably less than or equal to 0.935 g/cm³, more preferably less than or equal to 0.930 g/cm³, and further preferably less than or equal to 0.925 g/cm³,
         iii. the layer C3 comprises a polyolefin, preferably a polyethylene, more preferably a LDPE, and further preferably an LLDPE, with a density of less than 0.940 g/cm³, preferably less than or equal to 0.935 g/cm³, more preferably less than or equal to 0.930 g/cm³, and further preferably less than or equal to 0.925 g/cm³;
wherein the layered sub-structure B is arranged between the layered sub-structure A and the layered sub-structure C.

In the 3^{rd} embodiment, the layers in the layered sub-structure A are arranged in this order: A1, A2, A3 (if present). In the 3^{rd} embodiment, the layers in the layered sub-structure C are arranged in this order: C1, C2 (if present), C3.

In a preferred aspect of the 3^{rd} embodiment, at least seven layers are at least partially simultaneously extruded, more preferably simultaneously extruded, e.g., co-extruded. In another preferred aspect of the 3^{rd} embodiment, at least nine layers are at least partially simultaneously extruded, more preferably simultaneously extruded, e.g., co-extruded. In yet another preferred aspect of the 3^{rd} embodiment, seven layers or nine layers are at least partially simultaneously extruded, more preferably simultaneously extruded, e.g., co-extruded.

In a preferred aspect of the 3^{rd} embodiment, the layered structure, more preferably the film, is produced using co-extrusion. In a preferred aspect of the 3^{rd} embodiment, the layered structure, more preferably the film, is produced using blown-film extrusion and/or cast-film extrusion, even more preferably blown-film extrusion. In a preferred aspect of the 3^{rd} embodiment, the at least five layers are simultaneously extruded, e.g., co-extruded.

In a preferred aspect of the 3^{rd} embodiment, the polyolefin in the layer A1 is a first polyolefin. In a preferred aspect of the 3^{rd} embodiment, the polyolefin in the layer A2 is a third polyolefin. In a preferred aspect of the 3^{rd} embodiment, the polyolefin in the layer A3, if present, is the first polyolefin.

In a preferred aspect of the 3^{rd} embodiment, the layered sub-structure B comprises at least two layers, and more preferably comprises at least three layers. In a preferred aspect of the 3^{rd} embodiment, the layered sub-structure B consists of three layers. In a preferred aspect of the 3^{rd} embodiment, the layered sub-structure B comprises a layer (e.g., B2) that comprises at least one or all of the following: a polyamide, an ethylene/vinyl alcohol copolymer (EVOH), a polyvinyl alcohol (PVOH), a polyvinylidene chloride (PVDC), wherein EVOH and PVOH are more preferred than PVDC, wherein EVOH is more preferred than PVOH. In a preferred aspect of the 3^{rd} embodiment, the layered sub-structure B consists of three layers, with one layer (e.g., B2) of said three layers comprising at least one or all of the following: a polyamide, an ethylene/vinyl alcohol copolymer (EVOH), a polyvinyl alcohol (PVOH), a polyvinylidene chloride (PVDC), wherein EVOH and PVOH are more preferred than PVDC, wherein EVOH is more preferred than PVOH. In a preferred aspect of the 3^{rd} embodiment, the layered sub-structure B consists of three layers, with one layer (e.g., B2) of said three layers being adapted and arranged to function as a gas barrier and preferably two layers (e.g., B1, B3) of said three layers being adapted and arranged to function as adhesive layers.

In a preferred aspect of the 3^{rd} embodiment, the polyolefin in the layer C1 is the first polyolefin. In a preferred aspect of the 3^{rd} embodiment, the polyolefin in the layer C2, if present, is the third polyolefin. In a preferred aspect of the 3^{rd} embodiment, the polyolefin in the layer C3 is a fourth polyolefin.

In a preferred aspect of the 3^{rd} embodiment, the film and/or the layered structure, more preferably both, are unoriented. In a preferred aspect of the 3^{rd} embodiment, at least one, more preferably all, of the following are unoriented: the layered sub-structure A, the layered sub-structure B, the layered sub-structure C. In a preferred aspect of the 3^{rd} embodiment, the method does not include a step of subjecting the film to a stretching step (e.g., the film is not subjected to a stretching step in either a machine direction of a transverse direction). In a preferred aspect of the 3^{rd} embodiment, the method does not include a step of subjecting the layered structure to a stretching step. In a preferred aspect of the 3^{rd} embodiment, the method does not include a step of subjecting at least one layered sub-structure to a stretching step.

In a preferred embodiment of the method for producing a film, at least one or all of the following applies:
a. the polyolefin in the layer A1 has a density in the range from 0.940 to 0.995 g/cm³, preferably from 0.950 to 0.985 g/cm³, more preferably from 0.955 to 0.980 g/cm³, and further preferably from 0.960 to 0.975 g/cm³;
b. the polyolefin in the layer A2 has a density in the range from 0.900 to less than 0.940 g/cm³, preferably from 0.903 to 0.937 g/cm³, more preferably from 0.908 to 0.934 g/cm³, and further preferably from 0.913 to 0.932 g/cm³;
c. the polyolefin in the layer A3 has a density in the range from 0.940 to 0.995 g/cm³, preferably from 0.950 to 0.985 g/cm³, more preferably from 0.955 to 0.980 g/cm³, and further preferably from 0.960 to 0.975 g/cm³.

This preferred embodiment is a 4^{th} embodiment of the invention, that preferably depends on the 3^{rd} embodiment of the invention.

In an aspect of the 4^{th} embodiment, all possible combinations of the features a. to c. are preferred aspects of the embodiment. These combinations are *e.g.,* a; b; c; a+b; a+c; b+c; a+b+c.

In a preferred embodiment of the method for producing a film, at least one or all of the following applies:
a. the polyolefin in the layer C1 has a density in the range from 0.940 to 0.995 g/cm³, preferably from 0.950 to 0.985 g/cm³, more preferably from 0.955 to 0.980 g/cm³, and further preferably from 0.960 to 0.975 g/cm³;
b. the polyolefin in the layer C2 has a density in the range from 0.900 to less than 0.940 g/cm³, preferably from 0.903 to 0.935 g/cm³, more preferably from 0.908 to 0.930 g/cm³, and further preferably from 0.913 to 0.925 g/cm³;
c. the polyolefin in the layer C3 has a density in the range from 0.869 to 0.940 g/cm³, preferably from 0.879 to 0.935 g/cm³, more preferably from 0.886 to 0.930 g/cm³, and further preferably from 0.892 to 0.925 g/cm³.

This preferred embodiment is a 5^{th} embodiment of the invention, that preferably depends on any of the 3^{rd} to 4^{th} embodiments of the invention.

In an aspect of the 5^{th} embodiment, all possible combinations of the features a. to c. are preferred aspects of the embodiment. These combinations are *e.g.,* a; b; c; a+b; a+c; b+c; a+b+c. In a preferred aspect X of the 5^{th} embodiment, feature c., the polyolefin in the layer C3 has a density in the range from 0.875 to less than 0.940 g/cm³, preferably from 0.885 to 0.935 g/cm³, more preferably from 0.892 to 0.930 g/cm³, and further preferably from 0.898 to 0.925 g/cm³. In a preferred aspect Y of the 5^{th} embodiment, feature c., the polyolefin in the layer C3 has a density in the range from 0.869 to 0.936 g/cm³, preferably from 0.879 to 0.931 g/cm³, more preferably from 0.886 to 0.926 g/cm³, and further preferably from 0.892 to 0.921 g/cm³.

In a preferred embodiment of the method for producing a film, the at least five layers are extruded at a temperature in the range from 170 to 250 °C, preferably from 180 to 240 °C, more preferably from 180 to 220 °C, and further preferably from 190 to 210 °C.

This preferred embodiment is a 6^{th} embodiment of the invention, that preferably depends on any of the 3^{rd} to 5^{th} embodiments of the invention.

In a preferred embodiment of the method for producing a film, the method further comprising the step of allowing the film to cool at a rate that is in the range from 60 to 430 °C/min, preferably from 90 to 400 °C/min, and further preferably from 120 to 370 °C/min.

This preferred embodiment is a 7^{th} embodiment of the invention, that preferably depends on any of the 3^{rd} to 6^{th} embodiments of the invention.

In the 8^{th} to 54^{th} embodiments, the wording "In a preferred embodiment of the container and/or the method for producing a film" should be understood to mean that these embodiments are independent and separate preferred embodiments of the container for accommodating a product, according to any of the 1^{st} to 2^{nd} embodiments, and the method for producing a film, according to any of the 3^{rd} to 7^{th} embodiments.

In a preferred embodiment of the container and/or the method for producing a film, a thickness A of the layered sub-structure A is less than or equal to, preferably less than, a thickness C of the layered sub-structure C.

This preferred embodiment is an 8^{th} embodiment of the invention, that preferably depends on any of the 1^{st} to 7^{th} embodiments of the invention.

In a preferred embodiment of the container and/or the method for producing a film, at least one or all of the following applies:
a. a thickness B of the layered sub-structure B is less than the thickness A;
b. the thickness B of the layered sub-structure B is less than the thickness C.

This preferred embodiment is a 9^{th} embodiment of the invention, that preferably depends on any of the 1^{st} to 8^{th} embodiments of the invention.

In an aspect of the 9^{th} embodiment, all possible combinations of the features a. and b. are preferred aspects of the embodiment. These combinations are *e.g.,* a; b; a+b.

In a preferred embodiment of the container and/or the method for producing a film, at least one or all of the following applies:
a. a ratio of the thickness C to the thickness A is in the range from 0.5 to 2.9, preferably from 0.8 to 2.4, more preferably from 1.0 to 2.2, and further preferably 1.20 to 2.05;
b. a ratio of the thickness A to the thickness B is in the range from 0.6 to 2.9, preferably from 0.9 to 2.4, more preferably from 1.1 to 2.2, and further preferably 1.35 to 2.10;
c. a ratio of the thickness C to the thickness B is in the range from 1.3 to 4.5, preferably from 1.5 to 4.2, more preferably from 1.7 to 4, and further preferably 1.90 to 3.85.

This preferred embodiment is a 10^{th} embodiment of the invention, that preferably depends on any of the 1^{st} to 9^{th} embodiments of the invention.

In an aspect of the 10^{th} embodiment, all possible combinations of the features a. to c. are preferred aspects of the embodiment. These combinations are *e.g.,* a; b; c; a+b; a+c; b+c; a+b+c.

In a preferred aspect X of the 10^{th} embodiment, at least one or all of the following applies:
a./ a ratio of the thickness C to the thickness A is in the range from 1.1 to 2.9, preferably from 1.4 to 2.4, more preferably from 1.6 to 2.2, and further preferably 1.75 to 2.05;
b./ a ratio of the thickness A to the thickness B is in the range from 1.1 to 2.9, preferably from 1.4 to 2.4, more preferably from 1.6 to 2.2, and further preferably 1.8 to 2.1;
c./ a ratio of the thickness C to the thickness B is in the range from 3.0 to 4.5, preferably from 3.2 to 4.2, more preferably from 3.4 to 4, and further preferably 3.60 to 3.85.

In the preferred aspect X of the 10^{th} embodiment, all possible combinations of the features a./ to c./ are preferred aspects of the embodiment. These combinations are *e.g.,* a./; b./; c./; a./+b./; a./+c./; b./+c./; a./+b./+c./.

In a preferred aspect Y of the 10^{th} embodiment, at least one or all of the following applies:
a./ a ratio of the thickness C to the thickness A is in the range from 0.5 to 2.4 preferably from 0.8 to 1.9, more preferably from 1.0 to 1.7, and further preferably 1.20 to 1.50;
b./ a ratio of the thickness A to the thickness B is in the range from 0.6 to 2.5, preferably from 0.9 to 2.0, more preferably from 1.1 to 1.8, and further preferably 1.35 to 1.65;
c./ a ratio of the thickness C to the thickness B is in the range from 1.3 to 2.8, preferably from 1.5 to 2.5, more preferably from 1.7 to 2.3, and further preferably 1.90 to 2.18.

In the preferred aspect Y of the 10^{th} embodiment, all possible combinations of the features a./ to c./ are preferred aspects of the embodiment. These combinations are *e.g.,* a./; b./; c./; a./+b./; a./+c./; b./+c./; a./+b./+c./.

In a preferred embodiment of the container and/or the method for producing a film, at least one or all of the following applies:
a. the thickness A is in the range from 23 to 51 µm, preferably from 26 to 48 µm, more preferably from 29 to 45 µm, and further preferably from 32 to 42 µm;
b. the thickness B is in the range from 10 to 34 µm, preferably from 12 to 32 µm, more preferably from 14 to 30 µm, and further preferably from 16 to 28 µm;
c. the thickness C is in the range from 41 to 79 µm, preferably from 44 to 76 µm, more preferably from 47 to 73 µm, and further preferably from 50 to 70 µm.

This preferred embodiment is an 11^{th} embodiment of the invention, that preferably depends on any of the 1^{st} to 10^{th} embodiments of the invention.

In an aspect of the 11^{th} embodiment, all possible combinations of the features a. to c. are preferred aspects of the embodiment. These combinations are *e.g.,* a; b; c; a+b; a+c; b+c; a+b+c.

In a preferred aspect X of the 11^{th} embodiment, at least one or all of the following applies:
a./ the thickness A is in the range from 23 to 47 µm, preferably from 26 to 44 µm, more preferably from 29 to 41 µm, and further preferably from 32 to 38 µm;
b./ the thickness B is in the range from 10 to 26 µm, preferably from 12 to 24 µm, more preferably from 14 to 22 µm, and further preferably from 16 to 20 µm;
c./ the thickness C is in the range from 55 to 79 µm, preferably from 58 to 76 µm, more preferably from 61 to 73 µm, and further preferably from 64 to 70 µm.

In the preferred aspect X of the 11^{th} embodiment, all possible combinations of the features a./ to c./ are preferred aspects of the embodiment. These combinations are *e.g.,* a./; b./; c./; a./+b./; a./+c./; b./+c./; a./+b./+c./.

In a preferred aspect Y of the 11^{th} embodiment, at least one or all of the following applies:
a./ the thickness A is in the range from 27 to 51 µm, preferably from 30 to 48 µm, more preferably from 33 to 45 µm, and further preferably from 36 to 42 µm;
b./ the thickness B is in the range from 18 to 34 µm, preferably from 20 to 32 µm, more preferably from 22 to 30 µm, and further preferably from 24 to 28 µm;
c./ the thickness C is in the range from 41 to 65 µm, preferably from 44 to 62 µm, more preferably from 47 to 59 µm, and further preferably from 50 to 56 µm.

In the preferred aspect Y of the 11^{th} embodiment, all possible combinations of the features a./ to c./ are preferred aspects of the embodiment. These combinations are *e.g.,* a./; b./; c./; a./+b./; a./+c./; b./+c./; a./+b./+c./.

In a preferred embodiment of the container and/or the method for producing a film, at least one or all of the following applies:
a. the thickness A is in the range from 17 to 45 %, preferably from 20 to 42 %, more preferably from 23 to 39 %, and further preferably from 26 to 36 % of the thickness of the layered structure;
b. the thickness B is in the range from 7 to 30 %, preferably from 9 to 28 %, more preferably from 11 to 26 %, and further preferably from 13 to 24 % of the thickness of the layered structure;
c. the thickness C is in the range from 33 to 68 %, preferably from 36 to 65 %, more preferably from 39 to 62 %, and further preferably from 42 to 59 % of the thickness of the layered structure;
subject to the limitation that the sum of the thickness A, the thickness B, and the thickness C does not exceed 100 %.

This preferred embodiment is a 12^{th} embodiment of the invention, that preferably depends on any of the 1^{st} to 11^{th} embodiments of the invention.

In an aspect of the 12^{th} embodiment, all possible combinations of the features a. to c. are preferred aspects of the embodiment. These combinations are *e.g.,* a; b; c; a+b; a+c; b+c; a+b+c. In the 12^{th} embodiment, the sum of the thickness A, the thickness B, and the thickness C may be less than 100 %.

In a preferred aspect X of the 12^{th} embodiment, at least one or all of the following applies:
a./ the thickness A is in the range from 17 to 41 %, preferably from 20 to 38 %, more preferably from 23 to 35 %, and further preferably from 26 to 32 % of the thickness of the layered structure;
b./ the thickness B is in the range from 7 to 23 %, preferably from 9 to 21 %, more preferably from 11 to 19 %, and further preferably from 13 to 17 % of the thickness of the layered structure;
c./ the thickness C is in the range from 44 to 68 %, preferably from 47 to 65 %, more preferably from 50 to 62 %, and further preferably from 53 to 59 % of the thickness of the layered structure;
subject to the limitation that the sum of the thickness A, the thickness B, and the thickness C does not exceed 100 %.

In the preferred aspect X of the 12^{th} embodiment, all possible combinations of the features a./ to c./ are preferred aspects of the embodiment. These combinations are *e.g.,* a./; b./; c./; a./+b./; a./+c./; b./+c./; a./+b./+c./. In the preferred aspect X of the 12^{th} embodiment, the sum of the thickness A, the thickness B, and the thickness C may be less than 100 %.

In a preferred aspect Y of the 12^{th} embodiment, at least one or all of the following applies:
a./ the thickness A is in the range from 21 to 45 %, preferably from 24 to 42 %, more preferably from 27 to 39 %, and further preferably from 30 to 36 % of the thickness of the layered structure;
b./ the thickness B is in the range from 14 to 30 %, preferably from 16 to 28 %, more preferably from 18 to 26 %, and further preferably from 20 to 24 % of the thickness of the layered structure;
c./ the thickness C is in the range from 33 to 57 %, preferably from 36 to 54 %, more preferably from 39 to 51 %, and further preferably from 42 to 49 % of the thickness of the layered structure;
subject to the limitation that the sum of the thickness A, the thickness B, and the thickness C does not exceed 100 %.

In the preferred aspect Y of the 12^{th} embodiment, all possible combinations of the features a./ to c./ are preferred aspects of the embodiment. These combinations are *e.g.,* a./; b./; c./; a./+b./; a./+c./; b./+c./; a./+b./+c./. In the preferred aspect Y of the 12^{th} embodiment, the sum of the thickness A, the thickness B, and the thickness C may be less than 100 %.

In a preferred embodiment of the container and/or the method for producing a film, the following applies:
a. the layered sub-structure A comprises at least two layers that have different densities, and
b. the layered sub-structure C comprises at least two layers that have different densities.

This preferred embodiment is a 13^{th} embodiment of the invention, that preferably depends on any of the 1^{st} to 12^{th} embodiments of the invention.

In a preferred embodiment of the container and/or the method for producing a film, at least one or all of the following applies:
a. the at least two layers of the layered sub-structure A, which have different densities, are arranged to touch each other;
b. the at least two layers of the layered sub-structure C, which have different densities, are arranged to touch each other.

This preferred embodiment is a 14^{th} embodiment of the invention, that preferably depends on the 13^{th} embodiment of the invention.

In an aspect of the 14^{th} embodiment, all possible combinations of the features a. and b. are preferred aspects of the embodiment. These combinations are *e.g.,* a; b; a+b. An example of the 14^{th} embodiment, feature a., is the following: the layered sub-structure A comprises two layers A1 and A2, wherein said layers have different densities, and wherein said layers with different densities are arranged to touch each other. E.g., the layers A1 and A2 have different densities and are arranged to touch each other. An example of the 14^{th} embodiment, feature a., is the following: the layered sub-structure A comprises three layers A1, A2, and A3, wherein at least two of these layers have different densities, and wherein said layers with different densities are arranged to touch each other. E.g., the layers A1 and A2 have different densities and are arranged to touch each other. An example of the 14^{th} embodiment, feature b., is the following: the layered sub-structure C comprises two layers C1 and C3, wherein said layers have different densities, and wherein said layers with different densities are arranged to touch each other. E.g., the layers C1 and C3 have different densities and are arranged to touch each other. An example of the 14^{th} embodiment, feature b., is the following: the layered sub-structure C comprises three layers C1, C2, and C3, wherein at least two of these layers have different densities, and wherein said layers with different densities are arranged to touch each other. E.g., the layers C1 and C2 have different densities and are arranged to touch each other.

In a preferred embodiment of the container and/or the method for producing a film, at least one layer, of the at least two layers, of the layered sub-structure A has a density that differs from the density of at least one layer, of the at least two layers, of the layered sub-structure C.

This preferred embodiment is a 15^{th} embodiment of the invention, that preferably depends on any of the 1^{st} to 14^{th} embodiments of the invention, and more preferably on any of the 13^{th} to 14^{th} embodiments of the invention.

An example of the 15^{th} embodiment is the following: the layered sub-structure A comprises the layers A1, A2, and optionally A3, the layered sub-structure C comprises the layers C1, optionally C2, and C3, wherein a density of at least one layer, of the layers A1, A2, A3, differs from a density of at least one layer, of the layers C1, C2, and C3. E.g., the density of the layer A1 differs from the density of the layer C3.

In a preferred embodiment of the container and/or the method for producing a film, at least one or all of the following applies:
a. at least one layer, of the at least two layers, of the layered sub-structure A has a density that is larger than the density of at least one layer, of the at least two layers, of the layered sub-structure C;
b. at least one layer, of the at least two layers, of the layered sub-structure A has a density that is less than the density of at least one layer, of the at least two layers, of the layered sub-structure C.

This preferred embodiment is a 16^{th} embodiment of the invention, that preferably depends on any of the 1^{st} to 15^{th} embodiments of the invention, and more preferably on any of the 13^{th} to 15^{th} embodiments of the invention.

In an aspect of the 16^{th} embodiment, all possible combinations of the features a. and b. are preferred aspects of the embodiment. These combinations are *e.g.,* a; b; a+b. An example of the 16^{th} embodiment, feature a., is the following: the layered sub-structure A comprises the layers A1, A2, and optionally A3, the layered sub-structure C comprises the layers C1, optionally C2, and C3, and wherein a density of at least one layer, of the layers A1, A2, A3, is larger than a density of at least one layer, of the layers C1, C2, and C3. E.g., the density of the layer A1 is larger than the density of the layer C3. An example of the 16^{th} embodiment, feature b., is the following: the layered sub-structure A comprises the layers A1, A2, and optionally A3, the layered sub-structure C comprises the layers C1, optionally C2, and C3, wherein a density of at least one layer, of the layers A1, A2, A3, is less than a density of at least one layer, of the layers C1, C2, and C3. E.g., the density of the layer A2 is less than the density of the layer C1.

In a preferred embodiment of the container and/or the method for producing a film, the layered structure has a thickness that is in the range from 50 to 200 µm, preferably from 70 to 170 µm, more preferably from 90 to 150 µm, and further preferably from 105 to 135 µm.

This preferred embodiment is a 17^{th} embodiment of the invention, that preferably depends on any of the 1^{st} to 16^{th} embodiments of the invention.

In a preferred embodiment of the container and/or the method for producing a film, at least one or all of the following applies:
a. a layer of the layered sub-structure A forms a first surface of the layered structure, more preferably a first surface of the film, and further preferably the first surface of the container;
b. a layer of the layered sub-structure C forms a further surface of the layered structure, more preferably a further surface of the film, and further preferably the further surface of the container.

This preferred embodiment is an 18^{th} embodiment of the invention, that preferably depends on any of the 1^{st} to 17^{th} embodiments of the invention.

In an aspect of the 18^{th} embodiment, all possible combinations of the features a. and b. are preferred aspects of the embodiment. These combinations are *e.g.,* a; b; a+b. In an alternative to feature a. in the 18^{th} embodiment, a layer of the layered sub-structure A forms a first surface of the layered structure, more preferably a first surface of the film, wherein said first surface is at least partially coated with a lacquer layer, a print layer, or both. In an aspect of the 18^{th} embodiment, the first and further surfaces of a layered structure are opposite each other. In an aspect of the 18^{th} embodiment, the first and further surfaces of a film are opposite each other.

In a preferred embodiment of the container and/or the method for producing a film, the layers of the layered structure, when viewed in a cross-sectional cut of the layered structure, are asymmetric. This preferred embodiment is a 19^{th} embodiment of the invention, that preferably depends on any of the 1^{st} to 18^{th} embodiments of the invention.

In a preferred aspect of the 19^{th} embodiment, the cross-sectional cut is made perpendicular to the layers of the layered structure.

In a preferred embodiment of the container and/or the method for producing a film, the asymmetry is with respect to at least one or all of the following: thicknesses of the layers, densities of the layers, chemical compositions of the layers.

This preferred embodiment is a 20^{th} embodiment of the invention, that preferably depends on the 19^{th} embodiment of the invention.

In a preferred embodiment of the container and/or the method for producing a film, at least one or all of the following applies:
a. the densities of two consecutive layers, of the at least two layers, of the layered sub-structure A differ;
b. the densities of any two consecutive layers, of the at least two layers, of the layered sub-structure A differ.

This preferred embodiment is a 21^{st} embodiment of the invention, that preferably depends on any of the 1^{st} to 20^{th} embodiments of the invention.

In an aspect of the 21^{st} embodiment, all possible combinations of the features a. and b. are preferred aspects of the embodiment. These combinations are *e.g.,* a; b; a+b.

In a preferred embodiment of the container and/or the method for producing a film, at least one or all of the following applies:
a. the densities of two consecutive layers, of the at least two layers, of the layered sub-structure C differ;
b. the densities of any two consecutive layers, of the at least two layers, of the layered sub-structure C differ.

This preferred embodiment is a 22^{nd} embodiment of the invention, that preferably depends on any of the 1^{st} to 21^{st} embodiments of the invention.

In an aspect of the 22^{nd} embodiment, all possible combinations of the features a. and b. are preferred aspects of the embodiment. These combinations are *e.g.,* a; b; a+b.

In a preferred embodiment of the container and/or the method for producing a film, the layered structure comprises in the range from 17 to 50 wt-%, preferably from 22 to 45 wt-%, more preferably from 29 to 41 wt-%, and further preferably from 29 to 38 wt-% of a polyolefin with a density of 0.94 g/cm³ or more.

This preferred embodiment is a 23^{rd} embodiment of the invention, that preferably depends on any of the 1^{st} to 22^{nd} embodiments of the invention.

In a preferred aspect of the 23^{rd} embodiment, the polyolefin is polyethylene, more preferably a HDPE. In a preferred aspect X of the 23^{rd} embodiment, the layered structure comprises in the range from 20 to 50 wt-%, preferably from 25 to 45 wt-%, more preferably from 29 to 41 wt-%, and further preferably from 32 to 38 wt-% of a polyolefin with a density of 0.94 g/cm³ or more. In a preferred aspect Y of the 23^{rd} embodiment, the layered structure comprises in the range from 17.5 to 47.5 wt-%, preferably from 22.5 to 42.5 wt-%, more preferably from 26.5 to 38.5 wt-%, and further preferably from 29.5 to 35.5 wt-% of a polyolefin with a density of 0.94 g/cm³ or more.

In a preferred embodiment of the container and/or the method for producing a film, at least one or all of the following applies:
a. the layered sub-structure A touches the layered sub-structure B;
b. the layered sub-structure C touches the layered sub-structure B.

This preferred embodiment is a 24^{th} embodiment of the invention, that preferably depends on any of the 1^{st} to 23^{rd} embodiments of the invention.

In an aspect of the 24^{th} embodiment, all possible combinations of the features a. and b. are preferred aspects of the embodiment. These combinations are *e.g.,* a; b; a+b.

In a preferred embodiment of the container and/or the method for producing a film, a cross-sectional cut of the layered sub-structure A comprises the following layers, arranged in this order: a layer A1, a layer A2, preferably a layer A3, wherein
I. the layer A1 has a thickness A1 and/or a density A1;
II. the layer A2 has a thickness A2 and/or a density A2;
III. the layer A3, if present, has a thickness A3 and/or a density A3;
IV. the layer A1 is arranged further from the layered sub-structure B compared to the layer A2.

This preferred embodiment is a 25^{th} embodiment of the invention, that preferably depends on any of the 1^{st} to 24^{th} embodiments of the invention.

In a preferred embodiment of the container and/or the method for producing a film, at least one or all of the following applies:
a. the thickness A1 is in the range from 28 to 67 %, preferably from 31 to 64 %, more preferably from 34 to 61 %, and further preferably from 37 to 58 % of the thickness A;
b. the thickness A2 is in the range from 22 to 57 %, preferably from 25 to 54 %, more preferably from 28 to 51 %, and further preferably from 31 to 49 % of the thickness A;
c. the thickness A3 is in the range from 13 to 38 %, preferably from 16 to 35 %, more preferably from 19 to 32 %, and further preferably from 22 to 29 % of the thickness A;
subject to the limitation that the sum of the thickness A1, the thickness A2, and the thickness A3, if present, does not exceed 100 %.

This preferred embodiment is a 26^{th} embodiment of the invention, that preferably depends on the 25^{th} embodiment of the invention.

In an aspect of the 26^{th} embodiment, all possible combinations of the features a. to c. are preferred aspects of the embodiment. These combinations are *e.g.,* a; b; c; a+b; a+c; b+c; a+b+c. In the 26^{th} embodiment, the sum of the thickness A1, the thickness A2, and the thickness A3, if present, may be less than 100 %.

In a preferred aspect X of the 26^{th} embodiment, at least one or all of the following applies:
a./ the thickness A1 is in the range from 28 to 52 %, preferably from 31 to 49 %, more preferably from 34 to 46 %, and further preferably from 37 to 43 % of the thickness A;
b./ the thickness A2 is in the range from 22 to 46 %, preferably from 25 to 43 %, more preferably from 28 to 40 %, and further preferably from 31 to 37 % of the thickness A;
c./ the thickness A3 is in the range from 13 to 38 %, preferably from 16 to 35 %, more preferably from 19 to 32 %, and further preferably from 22 to 29 % of the thickness A;
subject to the limitation that the sum of the thickness A1, the thickness A2, and the thickness A3, if present, does not exceed 100 %.

In the preferred aspect X of the 26^{th} embodiment, all possible combinations of the features a./ to c./ are preferred aspects of the embodiment. These combinations are *e.g.,* a./; b./; c./; a./+b./; a./+c./; b./+c./; a./+b./+c./. In the preferred aspect X of the 26^{th} embodiment, the sum of the thickness A1, the thickness A2, and the thickness A3, if present, may be less than 100 %.

In a preferred aspect Y of the 26^{th} embodiment, at least one or all of the following applies:
a./ the thickness A1 is in the range from 42.5 to 66.5 %, preferably from 45.5 to 63.5 %, more preferably from 48.5 to 60.5 %, and further preferably from 51.5 to 57.5 % of the thickness A;
b./ the thickness A2 is in the range from 33 to 57 %, preferably from 36 to 54 %, more preferably from 39 to 51 %, and further preferably from 42.5 to 48.5 % of the thickness A;
subject to the limitation that the sum of the thickness A1 and the thickness A2 does not exceed 100 %. In the preferred aspect Y of the 26^{th} embodiment, all possible combinations of the features a./ and b./ are preferred aspects of the embodiment. These combinations are *e.g.,* a./; b./; a./+b./. In the preferred aspect Y of the 26^{th} embodiment, the sum of the thickness A1 and the thickness A2 may be less than 100 %.

In a preferred embodiment of the container and/or the method for producing a film, at least one or all of the following applies:
a. the thickness A1 is in the range from 5 to 25 %, preferably from 7 to 23 %, more preferably from 9 to 21 %, and further preferably from 10 to 20 % of the thickness of the layered structure;
b. the thickness A2 is in the range from 3 to 24 %, preferably from 5 to 20 %, more preferably from 7 to 18 %, and further preferably from 8.5 to 16.5 % of the thickness of the layered structure;
c. the thickness A3 is in the range from 3 to 15 %, preferably from 4 to 13 %, more preferably from 5 to 11 %, and further preferably from 6 to 9 % of the thickness of the layered structure.

This preferred embodiment is a 27^{th} embodiment of the invention, that preferably depends on any of the 25^{th} to 26^{th} embodiments of the invention.

In an aspect of the 27^{th} embodiment, all possible combinations of the features a. to c. are preferred aspects of the embodiment. These combinations are *e.g.,* a; b; c; a+b; a+c; b+c; a+b+c.

In a preferred aspect X of the 27^{th} embodiment, at least one or all of the following applies:
a./ the thickness A1 is in the range from 5 to 19 %, preferably from 7 to 17 %, more preferably from 9 to 15 %, and further preferably from 10 to 13 % of the thickness of the layered structure;
b./ the thickness A2 is in the range from 3 to 19 %, preferably from 5 to 15 %, more preferably from 7 to 13 %, and further preferably from 8.5 to 11.5 % of the thickness of the layered structure;
c./ the thickness A3 is in the range from 3 to 15 %, preferably from 4 to 13 %, more preferably from 5 to 11 %, and further preferably from 6 to 9 % of the thickness of the layered structure.

In the preferred aspect X of the 27^{th} embodiment, all possible combinations of the features a./ to c./ are preferred aspects of the embodiment. These combinations are *e.g.,* a./; b./; c./; a./+b./; a./+c./; b./+c./; a./+b./+c./.

In a preferred aspect Y of the 27^{th} embodiment, at least one or all of the following applies:
a./ the thickness A1 is in the range from 11 to 25 %, preferably from 13 to 23 %, more preferably from 15 to 21 %, and further preferably from 16.5 to 19.5 % of the thickness of the layered structure;
b./ the thickness A2 is in the range from 8 to 24 %, preferably from 10 to 20 %, more preferably from 12 to 18 %, and further preferably from 13.5 to 16.5 % of the thickness of the layered structure.

In the preferred aspect Y of the 27^{th} embodiment, all possible combinations of the features a./ and b./ are preferred aspects of the embodiment. These combinations are *e.g.,* a./; b./; a./+b./.

In a preferred embodiment of the container and/or the method for producing a film, at least one or all of the following applies:
a. the thickness A1 is in the range from 6 to 31 µm, preferably from 9 to 27 µm, more preferably from 11 to 24 µm, and further preferably from 12.5 to 23 µm;
b. the thickness A2 is in the range from 5 to 28 µm, preferably from 7 to 24 µm, more preferably from 9 to 21 µm, and further preferably from 10.5 to 19.5 µm;
c. the thickness A3 is in the range from 2 to 19 µm, preferably from 4.5 to 15 µm, more preferably from 6 to 12 µm, and further preferably from 7.5 to 10.5 µm.

This preferred embodiment is a 28^{th} embodiment of the invention, that preferably depends on any of the 25^{th} to 27^{th} embodiments of the invention.

In an aspect of the 28^{th} embodiment, all possible combinations of the features a. to c. are preferred aspects of the embodiment. These combinations are *e.g.,* a; b; c; a+b; a+c; b+c; a+b+c.

In a preferred aspect X of the 28^{th} embodiment, at least one or all of the following applies:
a./ the thickness A1 is in the range from 6 to 24 µm, preferably from 9 to 20 µm, more preferably from 11 to 17 µm, and further preferably from 12.5 to 15.5 µm;
b./ the thickness A2 is in the range from 5 to 22 µm, preferably from 7 to 18 µm, more preferably from 9 to 15 µm, and further preferably from 10.5 to 13.5 µm;
c./ the thickness A3 is in the range from 2 to 19 µm, preferably from 4.5 to 15 µm, more preferably from 6 to 12 µm, and further preferably from 7.5 to 10.5 µm.

In the preferred aspect X of the 28^{th} embodiment, all possible combinations of the features a./ to c./ are preferred aspects of the embodiment. These combinations are *e.g.,* a./; b./; c./; a./+b./; a./+c./; b./+c./; a./+b./+c./.

In a preferred aspect Y of the 28^{th} embodiment, at least one or all of the following applies:
a./ the thickness A1 is in the range from 13 to 31 µm, preferably from 16 to 27 µm, more preferably from 18 to 24 µm, and further preferably from 19.5 to 22.5 µm;
b./ the thickness A2 is in the range from 11 to 28 µm, preferably from 13 to 24 µm, more preferably from 15 to 21 µm, and further preferably from 16.3 to 19.5 µm.

In the preferred aspect Y of the 28^{th} embodiment, all possible combinations of the features a./ and b./ are preferred aspects of the embodiment. These combinations are *e.g.,* a./; b./; a./+b./.

In a preferred embodiment of the container and/or the method for producing a film, at least one or all of the following applies:
a. the layer A1 comprises a first polyolefin, and preferably a second polyolefin;
b. the layer A2 comprises a third polyolefin;
c. the layer A3 comprises the first polyolefin.

This preferred embodiment is a 29^{th} embodiment of the invention, that preferably depends on any of the 25^{th} to 28^{th} embodiments of the invention.

In an aspect of the 29^{th} embodiment, all possible combinations of the features a. to c. are preferred aspects of the embodiment. These combinations are *e.g.,* a; b; c; a+b; a+c; b+c; a+b+c.

In a preferred embodiment of the container and/or the method for producing a film, at least one or all of the following applies:
a. the layer A1 comprises at least 70 wt-%, preferably at least 75 wt-%, more preferably at least 80 wt-%, and further preferably at least 85 wt-% of the first polyolefin;
b. the layer A2 comprises at least 70 wt-%, preferably at least 80 wt-%, more preferably at least 90 wt-%, and further preferably at least 95 wt-% of the third polyolefin;
c. the layer A3 comprises at least 70 wt-%, preferably at least 80 wt-%, more preferably at least 90 wt-%, and further preferably at least 95 wt-% of the first polyolefin;
with the wt-% based on the total weight of the respective layer.

This preferred embodiment is a 30^{th} embodiment of the invention, that preferably depends on any of the 25^{th} to 29^{th} embodiments of the invention.

In an aspect of the 30^{th} embodiment, all possible combinations of the features a. to c. are preferred aspects of the embodiment. These combinations are *e.g.,* a; b; c; a+b; a+c; b+c; a+b+c. In a preferred aspect X of the 30^{th} embodiment, feature a., the layer A1 comprises in the range from 70 to 100 wt-%, more preferably from 80 to 95 wt-%, and further preferably from 85 to 92 wt-% of the first polyolefin. In a preferred aspect Y of the 30^{th} embodiment, feature a., the layer A1 comprises at least 90 wt-%, more preferably at least 94 wt-%, and further preferably at least 97 wt-% of the first polyolefin. In a preferred aspect of the 30^{th} embodiment, feature b., the layer A2 comprises at least 97 wt-%, more preferably at least 98 wt-% of the third polyolefin. In a preferred aspect of the 30^{th} embodiment, feature c., the layer A3 comprises at least 97 wt-%, more preferably at least 98 wt-% of the first polyolefin.

In a preferred embodiment of the container and/or the method for producing a film, the layer A1 comprises in the range from 0 to 30 wt-%, preferably from 2.5 to 20 wt-%, more preferably from 5 to 16 wt-%, and further preferably from 7.5 to 12.5 wt-% of the second polyolefin, with the remaining wt-% of the layer A1 preferably made up of the first polyolefin, with the wt-% based on the total weight of the layer A1.

This preferred embodiment is a 31^{st} embodiment of the invention, that preferably depends on any of the 25^{th} to 30^{th} embodiments of the invention.

In a preferred aspect of the 31^{st} embodiment, the layered structure preferably comprises at least nine layers, more preferably consists of nine layers. In a preferred aspect of the 31^{st} embodiment, the layered sub-structure A preferably comprises, more preferably consists, of the layers A1, A2, and A3.

In a preferred embodiment of the container and/or the method for producing a film, at least one or all of the following applies:
a. the layer A1 touches the layer A2;
b. the layer A2 touches the layer A3.

This preferred embodiment is a 32^{nd} embodiment of the invention, that preferably depends on any of the 25^{th} to 31^{st} embodiments of the invention.

In an aspect of the 32^{nd} embodiment, all possible combinations of the features a. and b. are preferred aspects of the embodiment. These combinations are *e.g.,* a; b; a+b.

In a preferred embodiment of the container and/or the method for producing a film, a cross-sectional cut of the layered sub-structure B comprises the following layers, arranged in this order: preferably a layer B1, a layer B2, preferably a layer B3, wherein
I. the layer B1, if present, has a thickness B1 and/or a density B1;
II. the layer B2 has a thickness B2 and/or a density B2;
III. the layer B3, if present, has a thickness B3 and/or a density B3;
IV. the layer B1 is arranged closer to the layered sub-structure A compared to the layer B2.

This preferred embodiment is a 33^{rd} embodiment of the invention, that preferably depends on any of the 1^{st} to 32^{nd} embodiment of the invention.

In a preferred embodiment of the container and/or the method for producing a film, at least one or all of the following applies:
a. the thickness B1 is in the range from 20 to 40 %, preferably from 22 to 38 %, more preferably from 24 to 36 %, and further preferably from 25.5 to 34.5 % of the thickness B;
b. the thickness B2 is in the range from 26 to 52 %, preferably from 28 to 50 %, more preferably from 30 to 48 %, and further preferably from 31.5 to 46.8 % of the thickness B;
c. the thickness B3 is in the range from 20 to 40 %, preferably from 22 to 38 %, more preferably from 24 to 36 %, and further preferably from 25.5 to 34.5 % of the thickness B;
subject to the limitation that the sum of the thickness B1, if present, the thickness B2, and the thickness B3, if present, does not exceed 100 %.

This preferred embodiment is a 34^{th} embodiment of the invention, that preferably depends on the 33^{rd} embodiment of the invention.

In an aspect of the 34^{th} embodiment, all possible combinations of the features a. to c. are preferred aspects of the embodiment. These combinations are *e.g.,* a; b; c; a+b; a+c; b+c; a+b+c. In the 34^{th} embodiment, the sum of the thickness B1 (if present), the thickness B2, and the thickness B3 (if present) may be less than 100 %.

In a preferred aspect X of the 34^{th} embodiment, at least one or all of the following applies:
a./ the thickness B1 is in the range from 26 to 40 %, preferably from 28 to 38 %, more preferably from 30 to 36 %, and further preferably from 31.5 to 34.5 % of the thickness B;
b./ the thickness B2 is in the range from 26 to 40 %, preferably from 28 to 38 %, more preferably from 30 to 36 %, and further preferably from 31.5 to 34.5 % of the thickness B;
c./ the thickness B3 is in the range from 26 to 40 %, preferably from 28 to 38 %, more preferably from 30 to 36 %, and further preferably from 31.5 to 34.5 % of the thickness B;
subject to the limitation that the sum of the thickness B1 (if present) the thickness B2, and the thickness B3 (if present) does not exceed 100 %.

In the preferred aspect X of the 34^{th} embodiment, all possible combinations of the features a./ to c./ are preferred aspects of the embodiment. These combinations are *e.g.,* a./; b./; c./; a./+b./; a./+c./; b./+c./; a./+b./+c./.

In a preferred aspect Y of the 34^{th} embodiment, at least one or all of the following applies:
a./ the thickness B1 is in the range from 20 to 34 %, preferably from 22 to 32 %, more preferably from 24 to 30 %, and further preferably from 25.5 to 28.5 % of the thickness B;
b./ the thickness B2 is in the range from 38 to 52 %, preferably from 40 to 50 %, more preferably from 42 to 48 %, and further preferably from 43.5 to 46.8 % of the thickness B;
c./ the thickness B3 is in the range from 20 to 34 %, preferably from 22 to 32 %, more preferably from 24 to 30 %, and further preferably from 25.5 to 28.5 % of the thickness B;
subject to the limitation that the sum of the thickness B1 (if present), the thickness B2, and the thickness B3 (if present) does not exceed 100 %.

In the preferred aspect Y of the 34^{th} embodiment, all possible combinations of the features a./ to c./ are preferred aspects of the embodiment. These combinations are *e.g.,* a./; b./; c./; a./+b./; a./+c./; b./+c./; a./+b./+c./.

In a preferred embodiment of the container and/or the method for producing a film, at least one or all of the following applies:
a. the thickness B1 is in the range from 0.5 to 10.5 %, preferably from 1.5 to 9.5 %, more preferably from 2.5 to 8.5 %, and further preferably from 3.5 to 7.3 % of the thickness of the layered structure;
b. the thickness B2 is in the range from 0.5 to 14.5 %, preferably from 1.5 to 13.5 %, more preferably from 2.5 to 12.5 %, and further preferably from 3.5 to 11.5 % of the thickness of the layered structure;
c. the thickness B3 is in the range from 0.5 to 10.5 %, preferably from 1.5 to 9.5 %, more preferably from 2.5 to 8.5 %, and further preferably from 3.5 to 7.3 % of the thickness of the layered structure.

This preferred embodiment is a 35^{th} embodiment of the invention, that preferably depends on any of the 33^{rd} to 34^{th} embodiments of the invention.

In an aspect of the 35^{th} embodiment, all possible combinations of the features a. to c. are preferred aspects of the embodiment. These combinations are *e.g.,* a; b; c; a+b; a+c; b+c; a+b+c.

In a preferred aspect X of the 35^{th} embodiment, at least one or all of the following applies:
a./ the thickness B1 is in the range from 0.5 to 9.5 %, preferably from 1.5 to 8.5 %, more preferably from 2.5 to 7.5 %, and further preferably from 3.7 to 6.3 % of the thickness of the layered structure;
b./ the thickness B2 is in the range from 0.5 to 9.5 %, preferably from 1.5 to 8.5 %, more preferably from 2.5 to 7.5 %, and further preferably from 3.7 to 6.3 % of the thickness of the layered structure;
c./ the thickness B3 is in the range from 0.5 to 9.5 %, preferably from 1.5 to 8.5 %, more preferably from 2.5 to 7.5 %, and further preferably from 3.7 to 6.3 % of the thickness of the layered structure.

In the preferred aspect X of the 35^{th} embodiment, all possible combinations of the features a./ to c./ are preferred aspects of the embodiment. These combinations are *e.g.,* a./; b./; c./; a./+b./; a./+c./; b./+c./; a./+b./+c./.

In a preferred aspect Y of the 35^{th} embodiment, at least one or all of the following applies:
a./ the thickness B1 is in the range from 1.5 to 10.5 %, preferably from 2.5 to 9.5 %, more preferably from 3.5 to 8.5 %, and further preferably from 4.7 to 7.3 % of the thickness of the layered structure;
b./ the thickness B2 is in the range from 5.5 to 14.5 %, preferably from 6.5 to 13.5 %, more preferably from 7.5 to 12.5 %, and further preferably from 8.7 to 11.3 % of the thickness of the layered structure;
c./ the thickness B3 is in the range from 1.5 to 10.5 %, preferably from 2.5 to 9.5 %, more preferably from 3.5 to 8.5 %, and further preferably from 4.7 to 7.3 % of the thickness of the layered structure.

In the preferred aspect Y of the 35^{th} embodiment, all possible combinations of the features a./ to c./ are preferred aspects of the embodiment. These combinations are *e.g.,* a./; b./; c./; a./+b./; a./+c./; b./+c./; a./+b./+c./.

In a preferred embodiment of the container and/or the method for producing a film, at least one or all of the following applies:
a. the thickness B1 is in the range from 0.7 to 13.6 µm, preferably from 1.5 to 11.6 µm, more preferably from 3.5 to 9.6 µm, and further preferably from 4.5 to 8.6 µm;
b. the thickness B2 is in the range from 0.7 to 18.3 µm, preferably from 1.5 to 16.3 µm, more preferably from 3.5 to 14.3 µm, and further preferably from 4.5 to 13.3 µm;
c. the thickness B3 is in the range from 0.7 to 13.6 µm, preferably from 1.5 to 11.6 µm, more preferably from 3.5 to 9.6 µm, and further preferably from 4.5 to 8.6 µm.

This preferred embodiment is a 36^{th} embodiment of the invention, that preferably depends on any of the 33^{rd} to 35^{th} embodiments of the invention.

In an aspect of the 36^{th} embodiment, all possible combinations of the features a. to c. are preferred aspects of the embodiment. These combinations are *e.g.,* a; b; c; a+b; a+c; b+c; a+b+c.

In a preferred aspect X of the 36^{th} embodiment, at least one or all of the following applies:
a./ the thickness B1 is in the range from 0.7 to 12.5 µm, preferably from 1.5 to 10.5 µm, more preferably from 3.5 to 8.5 µm, and further preferably from 4.5 to 7.5 µm;
b./ the thickness B2 is in the range from 0.7 to 12.5 µm, preferably from 1.5 to 10.5 µm, more preferably from 3.5 to 8.5 µm, and further preferably from 4.5 to 7.5 µm;
c./ the thickness B3 is in the range from 0.7 to 12.5 µm, preferably from 1.5 to 10.5 µm, more preferably from 3.5 to 8.5 µm, and further preferably from 4.5 to 7.5 µm.

In the preferred aspect X of the 36^{th} embodiment, all possible combinations of the features a./ to c./ are preferred aspects of the embodiment. These combinations are *e.g.,* a./; b./; c./; a./+b./; a./+c./; b./+c./; a./+b./+c./.

In a preferred aspect Y of the 36^{th} embodiment, at least one or all of the following applies:
a./ the thickness B1 is in the range from 1.8 to 13.6 µm, preferably from 2.6 to 11.6 µm, more preferably from 4.6 to 9.6 µm, and further preferably from 5.6 to 8.6 µm;
b./ the thickness B2 is in the range from 6.5 to 18.3 µm, preferably from 7.3 to 16.3 µm, more preferably from 9.3 to 14.3 µm, and further preferably from 10.3 to 13.3 µm;
c./ the thickness B3 is in the range from 1.8 to 13.6 µm, preferably from 2.6 to 11.6 µm, more preferably from 4.6 to 9.6 µm, and further preferably from 5.6 to 8.6 µm.

In the preferred aspect Y of the 36^{th} embodiment, all possible combinations of the features a./ to c./ are preferred aspects of the embodiment. These combinations are *e.g.,* a./; b./; c./; a./+b./; a./+c./; b./+c./; a./+b./+c./.

In a preferred embodiment of the container and/or the method for producing a film, at least one or all of the following applies:
a. the layer B1 is adapted and arranged to function as an adhesive layer;
b. the layer B2 is adapted and arranged to function as a gas barrier layer;
c. the layer B3 is adapted and arranged to function as an adhesive layer.

This preferred embodiment is a 37^{th} embodiment of the invention, that preferably depends on any of the 33^{rd} to 36^{th} embodiments of the invention.

In an aspect of the 37^{th} embodiment, all possible combinations of the features a. to c. are preferred aspects of the embodiment. These combinations are *e.g.,* a; b; c; a+b; a+c; b+c; a+b+c.

In a preferred embodiment of the container and/or the method for producing a film, at least one or all of the following applies:
a. the ethylene content of the layer B2 is in the range from 22 to 40 mol-%, preferably from 24 to 38 mol-%, more preferably from 25.5 to 36 mol-%, and further preferably from 27 to 34 mol-%;
b. the layer B2 comprises at least one or all of the following: a polyamide, an ethylene/vinyl alcohol copolymer (EVOH), a polyvinyl alcohol (PVOH), a polyvinylidene chloride (PVDC), wherein EVOH and PVOH are more preferred than PVDC, wherein EVOH is more preferred than PVOH;
c. the layer B2 has a melting point in the range from 175 to 200 °C, preferably from 181 to 194 °C, and further preferably from 185 to 191 °C.

This preferred embodiment is a 38^{th} embodiment of the invention, that preferably depends on any of the 33^{rd} to 37^{th} embodiments of the invention.

In an aspect of the 38^{th} embodiment, all possible combinations of the features a. to c. are preferred aspects of the embodiment. These combinations are *e.g.,* a; b; c; a+b; a+c; b+c; a+b+c.

In a preferred aspect X of the 38^{th} embodiment, feature a., the ethylene content of the layer B2 is in the range from 24 to 38 mol-%, more preferably from 25.5 to 34.0 mol-%, and further preferably from 27 to 31 mol-%.

In a preferred aspect Y of the 38^{th} embodiment, feature a., the ethylene content of the layer B2 is in the range from 25 to 38 mol-%, more preferably from 28 to 36 mol-%, and further preferably from 30 to 34 mol-%.

In a preferred embodiment of the container and/or the method for producing a film, at least one or all of the following applies:
a. the layer B1 comprises at least one or all of the following: a carboxylic acid, preferably a maleic acid, a carboxylic acid anhydride, preferably a maleic acid anhydride, a modified polyolefin, preferably modified polyethylene;
b. the layer B3 comprises at least one or all of the following: a carboxylic acid, preferably a maleic acid, a carboxylic acid anhydride, preferably a maleic acid anhydride, a modified polyolefin, preferably modified polyethylene.

This preferred embodiment is a 39^{th} embodiment of the invention, that preferably depends on any of the 33^{rd} to 38^{th} embodiments of the invention.

In an aspect of the 39^{th} embodiment, all possible combinations of the features a. and b. are preferred aspects of the embodiment. These combinations are *e.g.,* a; b; a+b.

In a preferred embodiment of the container and/or the method for producing a film, at least one or all of the following applies:
a. the layer B1 touches the layer B2;
b. the layer B2 touches the layer B3.

This preferred embodiment is a 40^{th} embodiment of the invention, that preferably depends on any of the 33^{rd} to 39^{th} embodiments of the invention.

In an aspect of the 40^{th} embodiment, all possible combinations of the features a. and b. are preferred aspects of the embodiment. These combinations are *e.g.,* a; b; a+b.

In a preferred embodiment of the container and/or the method for producing a film, a cross-sectional cut of the layered sub-structure C comprises the following layers, arranged in this order: a layer C1, preferably a layer C2, a layer C3, wherein
I. the layer C1 has a thickness C1 and/or a density C1;
II. the layer C2, if present, has a thickness C2 and/or a density C2;
III. the layer C3 has a thickness C3 and/or a density C3;
IV. the layer C1 is arranged closer to the layered sub-structure B compared to the layer C3.

This preferred embodiment is a 41^{st} embodiment of the invention, that preferably depends on any of the 1^{st} to 40^{th} embodiments of the invention.

In a preferred embodiment of the container and/or the method for producing a film, at least one or all of the following applies:
a. the thickness C1 is in the range from 20 to 43 %, preferably from 24 to 40 %, more preferably from 27 to 36 %, and further preferably from 28.5 to 35.0 % of the thickness C;
b. the thickness C2 is in the range from 17 to 37 %, preferably from 21 to 34 %, more preferably from 24 to 30 %, and further preferably from 25.5 to 28.5 % of the thickness C;
c. the thickness C3 is in the range from 32 to 78 %, preferably from 36 to 75 %, more preferably from 39 to 71 %, and further preferably from 41 to 69 % of the thickness C;
subject to the limitation that the sum of the thickness C1, the thickness C2, if present, and the thickness C3 does not exceed 100 %.

This preferred embodiment is a 42^{nd} embodiment of the invention, that preferably depends on the 41^{st} embodiment of the invention.

In an aspect of the 42^{nd} embodiment, all possible combinations of the features a. to c. are preferred aspects of the embodiment. These combinations are *e.g.,* a; b; c; a+b; a+c; b+c; a+b+c. In the 42^{nd} embodiment, the sum of the thickness C1, the thickness C2, if present, and the thickness C3 may be less than 100 %.

In a preferred aspect X of the 42^{nd} embodiment, at least one or all of the following applies:
a./ the thickness C1 is in the range from 20 to 40 %, preferably from 24 to 37 %, more preferably from 27 to 33 %, and further preferably from 28.5 to 31.5 % of the thickness C;
b./ the thickness C2 is in the range from 17 to 37 %, preferably from 21 to 34 %, more preferably from 24 to 30 %, and further preferably from 25.5 to 28.5 % of the thickness C;
c./ the thickness C3 is in the range from 32 to 55 %, preferably from 36 to 50 %, more preferably from 39 to 47 %, and further preferably from 41 to 45 % of the thickness C;
subject to the limitation that the sum of the thickness C1, the thickness C2, if present, and the thickness C3 does not exceed 100 %.

In the preferred aspect X of the 42^{nd} embodiment, all possible combinations of the features a./ to c./ are preferred aspects of the embodiment. These combinations are *e.g.,* a./; b./; c./; a./+b./; a./+c./; b./+c./; a./+b./+c./. In the preferred aspect X of the 42^{nd} embodiment, the sum of the thickness C1, the thickness C2, if present, and the thickness C3 may be less than 100 %.

In a preferred aspect Y of the 42^{nd} embodiment, at least one or all of the following applies:
a./ the thickness C1 is in the range from 23 to 43 %, preferably from 27 to 40 %, more preferably from 30 to 36 %, and further preferably from 31.7 to 35.0 % of the thickness C;
b./ the thickness C3 is in the range from 57 to 77 %, preferably from 61 to 74 %, more preferably from 64 to 70 %, and further preferably from 65.2 to 68.5 % of the thickness C;
subject to the limitation that the sum of the thickness C1 and the thickness C3 does not exceed 100 %.

In the preferred aspect Y of the 42^{nd} embodiment, all possible combinations of the features a./ and b./ are preferred aspects of the embodiment. These combinations are *e.g.,* a./; b./; a./+b./. In the preferred aspect Y of the 42^{nd} embodiment, the sum of the thickness C1 and the thickness C3 may be less than 100 %.

In a preferred embodiment of the container and/or the method for producing a film, at least one or all of the following applies:
a. the thickness C1 is in the range from 6 to 25 %, preferably from 9 to 22 %, more preferably from 11.5 to 19.5 %, and further preferably from 13.5 to 18.0 % of the thickness of the layered structure;
b. the thickness C2 is in the range from 6.5 to 23.0 %, preferably from 9.5 to 20.5 %, more preferably from 12 to 18 %, and further preferably from 13.5 to 16.5 % of the thickness of the layered structure;
c. the thickness C3 is in the range from 15.5 to 38.0 %, preferably from 18.5 to 35.5 %, more preferably from 21 to 33 %, and further preferably from 22.5 to 31.5 % of the thickness of the layered structure.

This preferred embodiment is a 43^{rd} embodiment of the invention, that preferably depends on any of the 41^{st} to 42^{nd} embodiments of the invention.

In an aspect of the 43^{rd} embodiment, all possible combinations of the features a. to c. are preferred aspects of the embodiment. These combinations are *e.g.,* a; b; c; a+b; a+c; b+c; a+b+c.

In a preferred aspect X of the 43^{rd} embodiment, at least one or all of the following applies:
a./ the thickness C1 is in the range from 8 to 25 %, preferably from 11 to 22 %, more preferably from 13.5 to 19.5 %, and further preferably from 15 to 18 % of the thickness of the layered structure;
b./ the thickness C2 is in the range from 6.5 to 23.0 %, preferably from 9.5 to 20.5 %, more preferably from 12.0 to 18.0 %, and further preferably from 13.5 to 16.5 % of the thickness of the layered structure;
c./ the thickness C3 is in the range from 15.5 to 32.5 %, preferably from 18.5 to 29.5 %, more preferably from 21.0 to 27.0 %, and further preferably from 22.5 to 25.5 % of the thickness of the layered structure.

In the preferred aspect X of the 43^{rd} embodiment, all possible combinations of the features a./ to c./ are preferred aspects of the embodiment. These combinations are *e.g.,* a./; b./; c./; a./+b./; a./+c./; b./+c./; a./+b./+c./.

In a preferred aspect Y of the 43^{rd} embodiment, at least one or all of the following applies:
a./ the thickness C1 is in the range from 6 to 23 %, preferably from 9 to 20 %, more preferably from 11.5 to 20.0 %, and further preferably from 13.5 to 16.5 % of the thickness of the layered structure;
b./ the thickness C3 is in the range from 21.5 to 38.0 %, preferably from 24.5 to 35.5 %, more preferably from 27.0 to 33.0 %, and further preferably from 28.5 to 31.5 % of the thickness of the layered structure.

In the preferred aspect Y of the 43^{rd} embodiment, all possible combinations of the features a./ and b./ are preferred aspects of the embodiment. These combinations are *e.g.,* a./; b./; a./+b./.

In a preferred embodiment of the container and/or the method for producing a film, at least one or all of the following applies:
a. the thickness C1 is in the range from 7 to 30 µm, preferably from 10 to 27 µm, more preferably from 13 to 24 µm, and further preferably from 15 to 22 µm;
b. the thickness C2 is in the range from 8 to 28 µm, preferably from 11 to 25 µm, more preferably from 14 to 22 µm, and further preferably from 16 to 20 µm;
c. the thickness C3 is in the range from 19 to 46 µm, preferably from 22 to 43 µm, more preferably from 25 to 40 µm, and further preferably from 27 to 38 µm.

This preferred embodiment is a 44^{th} embodiment of the invention, that preferably depends on any of the 41^{st} to 43^{rd} embodiments of the invention.

In an aspect of the 44^{th} embodiment, all possible combinations of the features a. to c. are preferred aspects of the embodiment. These combinations are *e.g.,* a; b; c; a+b; a+c; b+c; a+b+c.

In a preferred aspect X of the 44^{th} embodiment, at least one or all of the following applies:
a./ the thickness C1 is in the range from 10 to 30 µm, preferably from 13 to 27 µm, more preferably from 16 to 24 µm, and further preferably from 18 to 22 µm;
b./ the thickness C2 is in the range from 8 to 28 µm, preferably from 11 to 25 µm, more preferably from 14 to 22 µm, and further preferably from 16 to 20 µm;
c./ the thickness C3 is in the range from 19 to 39 µm, preferably from 22 to 36 µm, more preferably from 25 to 33 µm, and further preferably from 27 to 31 µm.

In the preferred aspect X of the 44^{th} embodiment, all possible combinations of the features a./ to c./ are preferred aspects of the embodiment. These combinations are *e.g.,* a./; b./; c./; a./+b./; a./+c./; b./+c./; a./+b./+c./.

In a preferred aspect Y of the 44^{th} embodiment, at least one or all of the following applies:
a./ the thickness C1 is in the range from 7.7 to 27.7 µm, preferably from 10.7 to 24.7 µm, more preferably from 13.7 to 21.7 µm, and further preferably from 15.7 to 19.7 µm;
b./ the thickness C3 is in the range from 25.4 to 45.4 µm, preferably from 28.4 to 42.4 µm, more preferably from 31.4 to 39.4 µm, and further preferably from 33.4 to 37.4 µm.

In the preferred aspect Y of the 44^{th} embodiment, all possible combinations of the features a./ and b./ are preferred aspects of the embodiment. These combinations are *e.g.,* a./; b./; a./+b./.

In a preferred embodiment of the container and/or the method for producing a film, at least one or all of the following applies:
a. the layer C1 comprises the first polyolefin;
b. the layer C2 comprises the third polyolefin;
c. the layer C3 comprises a fourth polyolefin, and preferably comprises at least one or all of the following: the second polyolefin, the third polyolefin, a fifth polyolefin.

This preferred embodiment is a 45^{th} embodiment of the invention, that preferably depends on any of the 41^{st} to 44^{th} embodiments of the invention.

In an aspect of the 45^{th} embodiment, all possible combinations of the features a. to c. are preferred aspects of the embodiment. These combinations are *e.g.,* a; b; c; a+b; a+c; b+c; a+b+c.

In a preferred embodiment of the container and/or the method for producing a film, at least one or all of the following applies:
a. the layer C1 comprises at least 70 wt-%, preferably at least 80 wt-%, more preferably at least 90 wt-%, and further preferably at least 95 wt-% of the first polyolefin;
b. the layer C2 comprises at least 70 wt-%, preferably at least 80 wt-%, more preferably at least 90 wt-%, and further preferably at least 95 wt-% of the third polyolefin;
c. the layer C3 comprises at least 30 wt-%, preferably at least 45 wt-%, more preferably at least 40 wt-%, and further preferably at least 45 wt-% of the fourth polyolefin;
with the wt-% based on the total weight of the respective layer.

This preferred embodiment is a 46^{th} embodiment of the invention, that preferably depends on any of the 41^{st} to 45^{th} embodiments of the invention.

In an aspect of the 46^{th} embodiment, all possible combinations of the features a. to c. are preferred aspects of the embodiment. These combinations are *e.g.,* a; b; c; a+b; a+c; b+c; a+b+c. In a preferred aspect of the 46^{th} embodiment, feature a., the layer C1 comprises at least 97 wt-%, more preferably at least 98 wt-% of the first polyolefin. In a preferred aspect of the 46^{th} embodiment, feature b., the layer C2 comprises at least 97 wt-%, more preferably at least 98 wt-% of the third polyolefin. In a preferred X aspect of the 46^{th} embodiment, feature c., the layer C3 comprises in the range from 30 to 60 wt-%, more preferably from 40 to 55 wt-%, and further preferably from 44 to 52 wt-%, of the fourth polyolefin. In a preferred Y aspect of the 46^{th} embodiment, feature c., the layer C3 comprises in the range from 37 to 68 wt-%, more preferably from 47 to 63 wt-%, and further preferably from 51 to 60 wt-%, of the fourth polyolefin.

In a preferred embodiment of the container and/or the method for producing a film, at least one or all of the following applies:
a. the layer C3 comprises in the range from 12 to 24 wt-%, preferably from 14 to 22 wt-%, and further preferably from 16 to 20 wt-% of the second polyolefin;
b. the layer C3 comprises in the range from 18 to 38 wt-%, preferably from 21 to 35 wt-%, even more preferably from 24 to 32 wt-%, and further preferably from 26 to 30 wt-% of the third polyolefin;
c. the layer C3 comprises in the range from 30 to 100 wt-%, preferably from 35 to 85 wt-%, more preferably from 40 to 65 wt-%, and further preferably from 43 to 55 wt-% of the fourth polyolefin;
with the wt-% based on the total weight of the layer C3, and wherein, if the layer C3 comprises two or more of the components of features a. to c., it is not required that the wt-% add up to 100 wt-%.

This preferred embodiment is a 47^{th} embodiment of the invention, that preferably depends on any of the 41^{st} to 46^{th} embodiments of the invention.

In an aspect of the 47^{th} embodiment, all possible combinations of the features a. to c. are preferred aspects of the embodiment. These combinations are *e.g.,* a; b; c; a+b; a+c; b+c; a+b+c. In a preferred aspect of the 47^{th} embodiment, the layered structure comprises at least nine layers, more preferably consists of nine layers. In a preferred aspect of the 47^{th} embodiment, the layered sub-structure C comprises, more preferably consists of, the layers C1, C2, and C3.

In a preferred embodiment of the container and/or the method for producing a film, at least one or all of the following applies:
a. the layer C3 comprises in the range from 30 to 100 wt-%, preferably from 35 to 80 wt-%, more preferably from 45 to 65 wt-%, and further preferably from 50 to 60 wt-% of the fourth polyolefin;
b. the layer C3 comprises in the range from 22 to 63 wt-%, preferably from 27 to 58 wt-%, even more preferably from 32 to 53 wt-%, and further preferably from 37 to 48 wt-% of the fifth polyolefin;
with the wt-% based on the total weight of the layer C3, and wherein, if the layer C3 comprises both of the components of features a. and b., it is not required that the wt-% add up to 100 wt-%.

This preferred embodiment is a 48^{th} embodiment of the invention, that preferably depends on any of the 41^{st} to 46^{th} embodiments of the invention.

In an aspect of the 48^{th} embodiment, all possible combinations of the features a. and b. are preferred aspects of the embodiment. These combinations are *e.g.,* a; b; a+b. In a preferred aspect of the 48^{th} embodiment, the layered structure comprises at least seven layers, more preferably consists of seven layers. In a preferred aspect of the 48^{th} embodiment, the layered structure has a layered sub-structure C that does not comprise the layer C2. In a preferred aspect of the 48^{th} embodiment, the layered structure has a layered sub-structure C that comprises, more preferably consists of, the layers C1 and C3.

In a preferred embodiment of the container and/or the method for producing a film, the layered sub-structure C comprise the layers C1 and C3, and wherein one of the following applies:
a. the layer C1 touches the layer C3; or
b. the layer C2 is arranged between the layer C1 and C3 (e.g., the layer C1 and the layer C3 do not touch).

This preferred embodiment is a 49^{th} embodiment of the invention, that preferably depends on any of the 41^{st} to 48^{th} embodiments of the invention.

In a preferred embodiment of the container and/or the method for producing a film, the layered sub-structure C comprise the layers C1, C2, and C3, and wherein at least one or all of the following applies:
a. the layer C1 touches the layer C2;
b. the layer C2 touches the layer C3.

This preferred embodiment is a 50^{th} embodiment of the invention, that preferably depends on any of the 41^{st} to 49^{th} embodiments of the invention.

In an aspect of the 50^{th} embodiment, all possible combinations of the features a. and b. are preferred aspects of the embodiment. These combinations are *e.g.,* a; b; a+b.

In a preferred embodiment of the container and/or the method for producing a film, at least one or all of the following applies:
a. the first polyolefin is a polyethylene, preferably a HDPE;
b. the second polyolefin is a polyethylene, preferably a LDPE, more preferably a LLDPE;
c. the third polyolefin is a polyethylene, preferably a LDPE, more preferably a LLDPE.

This preferred embodiment is a 51^{st} embodiment of the invention, that preferably depends on any of the 29^{th} to 50^{th} embodiments of the invention.

In an aspect of the 51^{st} embodiment, all possible combinations of the features a. to c. are preferred aspects of the embodiment. These combinations are *e.g.,* a; b; c; a+b; a+c; b+c; a+b+c.

In a preferred embodiment of the container and/or the method for producing a film, at least one or all of the following applies:
a. the first polyolefin has a density in the range from 0.940 to 0.995 g/cm³, preferably from 0.950 to 0.985 g/cm³, more preferably from 0.955 to 0.980 g/cm³, and further preferably from 0.960 to 0.975 g/cm³;
b. the second polyolefin has a density in the range from 0.900 to less than 0.940 g/cm³, preferably from 0.908 to 0.936 g/cm³, more preferably from 0.913 to 0.933 g/cm³, and further preferably from 0.918 to 0.928 g/cm³;
c. the third polyolefin has a density in the range from 0.900 to less than 0.940 g/cm³, preferably from 0.903 to 0.935 g/cm³, more preferably from 0.908 to 0.932 g/cm³, and further preferably from 0.913 to 0.930 g/cm³.

This preferred embodiment is a 52^{nd} embodiment of the invention, that preferably depends on any of the 29^{th} to 51^{st} embodiments of the invention.

In an aspect of the 52^{nd} embodiment, all possible combinations of the features a. to c. are preferred aspects of the embodiment. These combinations are *e.g.,* a; b; c; a+b; a+c; b+c; a+b+c. In a preferred aspect X of the 52^{nd} embodiment, the third polyolefin has a density in the range from 0.900 to less than 0.940 g/cm³, preferably from 0.903 to 0.935 g/cm³, more preferably from 0.908 to 0.930 g/cm³, and further preferably from 0.913 to 0.925 g/cm³. In a preferred aspect Y of the 52^{nd} embodiment, the third polyolefin has a density in the range from 0.900 to less than 0.940 g/cm³, preferably from 0.910 to 0.937 g/cm³, more preferably from 0.915 to 0.934 g/cm³, and further preferably from 0.920 to 0.932 g/cm³.

In a preferred embodiment of the container and/or the method for producing a film, at least one or all of the following applies:
a. the fourth polyolefin is a polyethylene, preferably a LDPE, a VLDPE, or a plastomer, more preferably a LLDPE;
b. the fourth polyolefin has a density in the range from 0.869 to 0.935 g/cm³, preferably from 0.879 to 0.925 g/cm³, more preferably from 0.886 to 0.918 g/cm³, and further preferably from 0.892 to 0.912 g/cm³.

This preferred embodiment is a 53^{rd} embodiment of the invention, that preferably depends on any of the 45^{th} to 52^{nd} embodiments of the invention.

In an aspect of the 53^{rd} embodiment, all possible combinations of the features a. and b. are preferred aspects of the embodiment. These combinations are *e.g.,* a; b; a+b. In a preferred aspect X of the 53^{rd} embodiment, the fourth polyolefin has a density in the range from 0.875 to 0.935 g/cm³, preferably from 0.885 to 0.925 g/cm³, more preferably from 0.892 to 0.918 g/cm³, and further preferably from 0.898 to 0.912 g/cm³. In a preferred aspect Y of the 53^{rd} embodiment, the fourth polyolefin has a density in the range from 0.869 to 0.929 g/cm³, preferably from 0.879 to 0.919 g/cm³, more preferably from 0.886 to 0.912 g/cm³, and further preferably from 0.892 to 0.906 g/cm³.

In a preferred embodiment of the container and/or the method for producing a film, at least one or all of the following applies:
a. the fifth polyolefin is a polyethylene, preferably a LDPE, a VLDPE, or a plastomer, more preferably a LLDPE, even more preferably an mLLDPE;
b. the fifth polyolefin has a density in the range from 0.896 to 0.936 g/cm³, preferably from 0.899 to 0.931 g/cm³, more preferably from 0.904 to 0.926 g/cm³, and further preferably from 0.909 to 0.921 g/cm³.

This preferred embodiment is a 54^{th} embodiment of the invention, that preferably depends on any of the 45^{th} to 53^{rd} embodiments of the invention.

In a preferred embodiment of the container, the further sidewall comprises
a. a first surface and a further surface, opposite the first surface, with the further surface facing the interior volume,
b. the film, wherein
   i. the film makes up at least 30 %, preferably at least 50 %, more preferably at least 70 %, and further preferably at least 90 % of a thickness of the further sidewall.

This preferred embodiment is a 55^{th} embodiment of the invention, that preferably depends on any of the 1^{st} to 2^{nd} and 8^{th} to 54^{th} embodiments of the invention.

In a preferred aspect of the 55^{th} embodiment, the film makes up at least 95 %, more preferably at least 99 % of the thickness of the further sidewall. In a preferred aspect of the 55^{th} embodiment, the thickness of the layered structure makes up at least 30 %, more preferably at least 50 %, even more preferably at least 70 %, and further preferably at least 90 % of the thickness of the further sidewall. In a preferred aspect of the 55^{th} embodiment, the thickness of the layered structure makes up at least 95 %, more preferably at least 99 % of the thickness of the further sidewall. In a preferred aspect of the 55^{th} embodiment, the film forms the further sidewall. In a preferred aspect of the 55^{th} embodiment, the further sidewall comprises less than 20 wt-%, more preferably less than 15 wt-%, even more preferably less than 10 wt-%, and further preferably less than 5 wt-% paper, cardboard, or both. In a preferred aspect of the 55^{th} embodiment, the further sidewall is substantially free of paper, cardboard, or both.

A 56^{th} embodiment of the invention is a method for producing a container for accommodating a product, comprising the steps of:
I./ providing a film obtained according to the method of invention for producing a film, preferably a film obtained by the method according to any of the 3^{rd} to 54^{th} embodiments of the invention;
II./ using the film to produce at least a first sidewall of the container, and preferably a further sidewall of the container, wherein the further sidewall is opposite the first sidewall.

In a preferred aspect of the 56^{th} embodiment, the product is a liquid product. In a preferred aspect of the 56^{th} embodiment, the product is a foodstuff, more preferably a liquid foodstuff.

In a preferred embodiment of the method for producing a container, the step of using the film to produce at least a first sidewall of the container comprises the following sub-steps:
A./ manipulating, preferably folding, the film to form a first sidewall and the further sidewall, opposite the first sidewall, that at least partially encloses an interior volume, wherein
   i. the first sidewall and the further sidewall each comprises
      a) a first edge,
      b) a first surface and a further surface, opposite the first surface, with the further surface facing the interior volume,
      c) the film;
   ii. for each of the first sidewall and the further sidewall, the layered sub-structure C is arranged closer to the interior volume compared to the layered sub-structure A;
B./ connecting the first edge of the first sidewall to the first edge of the further sidewall. This preferred embodiment is a 57^{th} embodiment of the invention, that preferably depends on the 56^{th} embodiment of the invention

In a preferred embodiment of the method for producing a container, the method further comprises the step of filling the container with a product.

This preferred embodiment is a 58^{th} embodiment of the invention, that preferably depends on any of the 56^{th} to 57^{th} embodiments of the invention

In a preferred aspect of the 58^{th} embodiment, the product is a liquid product. In a preferred aspect of the 58^{th} embodiment, the product is a foodstuff, more preferably a liquid foodstuff. In a preferred aspect of the invention, the container according to any of the 1^{st} to 2^{nd} and 8^{th} to 55^{th} embodiments are produced using the method according to any of the 56^{th} to 58^{th} embodiments.

A 59^{th} embodiment of the invention is a container obtainable by the method of the invention for producing a container for accommodating a product, preferably the method according to any of the 56^{th} to 58^{th} embodiments.

A 60^{th} embodiment of the invention is a container according to the invention, preferably a container according to any of the 1^{st} to 2^{nd}, 8^{th} to 55^{th} and 59^{th} embodiments of the invention, wherein the container is at least partially accommodated in a receptacle.

In a preferred aspect of the 60^{th} embodiment, the receptacle comprises at least 50 wt-%, more preferably at least 65 wt-%, even more preferably at least 80 wt-%, and further preferably at least 95 wt-% paper, cardboard, or both. In a preferred aspect of the 60^{th} embodiment, the receptacle is semi-rigid. In another preferred aspect of the 60^{th} embodiment, the receptacle is rigid. In another preferred aspect of the 60^{th} embodiment, the receptacle is cubic shaped or is a rectangular prism (i.e., has a three-dimensional rectangular shape). An example of a container accommodated in a receptacle is a bag-in-box.

A 61^{st} embodiment of the invention is a container according to the invention, preferably a container according to any of the 1^{st} to 2^{nd}, 8^{th} to 55^{th} and 59^{th} to 60^{th} embodiments of the invention, wherein the container is at least partially filled with a product.

In a preferred aspect of the 61^{st} embodiment, the product is a liquid product. In a preferred aspect of the 61^{st} embodiment, the product is a foodstuff, more preferably a liquid foodstuff.

In a preferred aspect of the container, the first sidewall, and preferably the further sidewall, have at least one or all of the following properties:
a. a dart drop impact in the range from 160 to 290 g, preferably from 180 to 270 g, and further preferably from 200 to 250 g;
b. an average puncture elongation in the range from 35 to 65 mm, preferably from 40 to 59 mm, and further preferably from 44 to 55 mm;
c. an average puncture force in the range from 95 to 150 N, preferably from 105 to 140 N, and further preferably from 115 to 130 N;
d. a Young's modulus, MD, in the range from 600 to 1150 MPa, preferably from 750 to 1050 MPa, and further preferably from 850 to 950 MPa;
e. a Young's modulus, TD, in the range from 600 to 1300 MPa, preferably from 850 to 1150 MPa, and further preferably from 950 to 1050 MPa;

This preferred embodiment is a 62^{nd} embodiment of the invention, that preferably depends on any of the 1^{st} to 2^{nd}, 8^{th} to 55^{th} and 59^{th} to 61^{st} embodiments of the invention.

In an aspect of the 62^{nd} embodiment, all possible combinations of the features a. to e. are preferred aspects of the embodiment. These combinations are *e.g.,* a; b; c; d; e; a+b; a+c; a+d; a+e; b+c; b+d; b+e; c+d; c+e; d+e; a+b+c; a+b+d; a+b+e; a+c+d; a+c+e; a+d+e; b+c+d; b+c+e; b+d+e; c+d+e; a+b+c+d; a+b+c+e; a+b+d+e; a+c+d+e; b+c+d+e; a+b+c+d+e.

In a preferred aspect of the container, the first sidewall, and preferably the further sidewall, have at least one or all of the following properties:
a. a maximum tensile strength, MD, in the range from 35 to 75 N/15 mm, preferably from 45 to 65 N/15 mm, and further preferably from 50 to 60 N/15 mm;
b. a maximum tensile strength, TD, in the range from 30 to 70 N/15 mm, preferably from 40 to 60 N/15 mm, and further preferably from 45 to 55 N/15 mm;
c. an elongation at break, MD, in the range from 650 to 1150 %, preferably from 750 to 1050 %, and further preferably from 850 to 950 %;
d. an elongation at break, TD, in the range from 650 to 1150 %, preferably from 750 to 1050 %, and further preferably from 850 to 950 %;
e. a seal strength, measured at 130 °C, in the range from 20 to 56 N/15 mm, preferably from 28 to 49 N/15 mm, and further preferably from 32 to 45 N/15 mm;
f. an oxygen transmission rate (OTR) of less than 1.5, preferably less than 1.1, and further preferably less than 0.6;

This preferred embodiment is a 63^{rd} embodiment of the invention, that preferably depends on any of the 1^{st} to 2^{nd}, 8^{th} to 55^{th} and 59^{th} to 62^{nd} embodiments of the invention.

In an aspect of the 63^{rd} embodiment, all possible combinations of the features a. to f. are preferred aspects of the embodiment. These combinations are *e.g.,* a; b; c; d; e; f; a+b; a+c; a+d; a+e; a+f; b+c; b+d; b+e; b+f; c+d; c+e; c+f; d+e; d+f; e+f; a+b+c; a+b+d; a+b+e; a+b+f; a+c+d; a+c+e; a+c+f; a+d+e; a+d+f; a+e+f; b+c+d; b+c+e; b+c+f; b+d+e; b+d+f; b+e+f; c+d+e; c+d+f; c+e+f; d+e+f; a+b+c+d; a+b+c+e; a+b+c+f; a+b+d+e; a+b+d+f; a+b+e+f; a+c+d+e; a+c+d+f; a+c+e+f; a+d+e+f; b+c+d+e; b+c+d+f; b+c+e+f; b+d+e+f; c+d+e+f; a+b+c+d+e; a+b+c+d+f; a+b+c+e+f; a+b+d+e+f; a+c+d+e+f; b+c+d+e+f; a+b+c+d+e+f. In a preferred aspect of the 63^{rd} embodiment, the OTR is in the range from 0.15 to 0.55, more preferably from 0.20 to 0.50, and further preferably from 0.25 to 0.45.

In a preferred aspect of the container, the first sidewall, and preferably the further sidewall, have at least one or all of the following properties:
a. COF In-In of less than 0.5, preferably less than 0.4, and further preferably less than 0.3;
b. COF Out-out of less than 0.5, preferably less than 0.4, and further preferably less than 0.3.

This preferred embodiment is a 64^{th} embodiment of the invention, that preferably depends on any of the 1^{st} to 2^{nd}, 8^{th} to 55^{th} and 59^{th} to 63^{rd} embodiments of the invention.

In an aspect of the 64^{th} embodiment, all possible combinations of the features a. and b. are preferred aspects of the embodiment. These combinations are *e.g.,* a; b; a+b.

A 65^{th} embodiment of the invention is a film obtainable by the method of the invention for producing a film, preferably the method according to any of the 3^{rd} to 54^{th} embodiments of the invention.

A 66^{th} embodiment of the invention is a use of a film according to the invention, preferably the film according to the 65^{th} embodiment of the invention, for producing a container for accommodating a product.

In a preferred aspect of the 66^{th} embodiment, the film comprises, more preferably consists of, the layered structure as described in any 1^{st} to 55^{th} embodiments of the invention. In a preferred aspect of the 66^{th} embodiment, the product is a liquid product. In a preferred aspect of the 66^{th} embodiment, the product is a foodstuff, more preferably a liquid foodstuff.

A 67^{th} embodiment of the invention is a use of a container according to the invention, preferably the container according to any of the 1^{st} to 2^{nd}, 8^{th} to 55^{th} and 59^{th} to 64^{th} embodiments of the invention, for accommodating a product.

In a preferred aspect of the 67^{th} embodiment, the product is a liquid product. In a preferred aspect of the 67^{th} embodiment, the product is a foodstuff, more preferably a liquid foodstuff.

### DETAILED DESCRIPTION OF THE INVENTION

Throughout this document, disclosures of ranges should preferably be understood to include both end points of the range. Furthermore, each disclosure of a range in the document should preferably be understood as also disclosing preferred sub-ranges in which one end point is excluded or both end points are excluded. For example, a disclosure of a range from X₁ to X₂ is to be understood as disclosing a range that includes both of the end points X₁ and X₂. Furthermore, it is to be understood as also disclosing a range that includes the end point X₁ but excludes the end point X₂, a range that excludes the end point X₁ but includes the end point X₂, and a range that excludes both end points X₁ and X₂.

Some preferred embodiments and preferred aspects have various combinations of features as alternatives. Where these various combinations are disclosed, the combinations are separated by a semi-colon (";"). For example, the list of the combination of features "a; a+b; a+c+d" for a preferred embodiment discloses a preferred embodiment that comprises the feature "a", a preferred embodiment that comprises the features "a" and "b", and a preferred embodiment that comprises the features "a", "c", and "d".

The use herein of letters and/or numbers to denote features is for distinguishing what might otherwise be similar or identical labels, such as "layer C1" and "layer C3", and does not imply a priority, an importance, a presence of further features, or other attributes, unless otherwise stated herein. For example, a layered sub-structure C that comprises a layer C3 should not be understood to necessarily imply that the layered sub-structure C also comprises a layer C2 (i.e., a layered sub-structure C comprising a layer C3 may, or may not, comprise a layer C2).

The following abbreviations are used herein. PE: polyethylene; HDPE: high-density polyethylene; LDPE: low-density polyethylene; LLDPE: linear low-density polyethylene; mLLDPE: metallocene LLDPE; VLDPE: very low-density polyethylene; COF: coefficient of friction; MD: machine direction; TD: transverse direction.

### Preferred aspects X and Y

A preferred aspect X preferably applies to a layered structure that has a layered sub-structure A that comprises, more preferably consists of, three layers. A preferred aspect X preferably applies to a layered structure that has a layered sub-structure A that comprises, more preferably consists of, the layers A1, A2, and A3. A preferred aspect X preferably applies to a layered structure that has a layered sub-structure C that comprises, more preferably consists of, three layers. A preferred aspect X preferably applies to a layered structure that has a layered sub-structure C that comprises, more preferably consists of, the layers C1, C2, and C3.

A preferred aspect Y preferably applies to a layered structure that has a layered sub-structure A that comprises, more preferably consists of, two layers. A preferred aspect Y preferably applies to a layered structure that has a layered sub-structure A that does not comprise the layer A3. A preferred aspect Y preferably applies to a layered structure that has a layered sub-structure A that comprises, more preferably consists of, the layers A1 and A2. A preferred aspect Y preferably applies to a layered structure that has a layered sub-structure C that comprises, more preferably consists of, two layers. A preferred aspect Y preferably applies to a layered structure that has a layered sub-structure C that does not comprise the layer C2. A preferred aspect Y preferably applies to a layered structure that has a layered sub-structure C that comprises, more preferably consists of, the layers C1 and C3.

A preferred aspect X preferably applies to a layered structure that comprises at least nine layers, more preferably consists of nine layers. A preferred aspect Y preferably applies to a layered structure that comprises at least seven layers, more preferably consists of seven layers. Preferred aspects X and/or Y preferably also apply to a layered structure that comprises at least eight layers, more preferably consists of eight layers. For example, it is preferred that a preferred aspect X applies to the layered sub-structure A of a layered structure consisting of eight layers. For example, it is preferred that a preferred aspect Y applies to the layered sub-structure C of a layered structure consisting of eight layers.

It may be noted that a preferred aspect X may apply to any layered structure according to the invention, e.g., a layered structure comprising or consisting of seven layers. A preferred aspect X is, however, more preferred for a layered structure that comprises nine layers than for a layered structure consisting of seven layers. It may also be noted that a preferred aspect Y may apply to any layered structure according to the invention, e.g., a layered structure comprising or consisting of nine layers. A preferred aspect Y is, however, more preferred for a layered structure that comprises, more preferably consists of, seven layers than for a layered structure comprising or consisting of nine layers.

A preferred aspect X may separately and independently apply to any container according to the invention, any method for producing a film (where said method is according to the invention), any method for producing a container (where said method is according to the invention), any film according to the invention, any use of a film (where said use is according to the invention), and any use of a container (where said use is according to the invention). A preferred aspect Y may separately and independently apply to any container according to the invention, any method for producing a film (where said method is according to the invention), any method for producing a container (where said method is according to the invention), any film according to the invention, any use of a film (where said use is according to the invention), and any use of a container (where said use is according to the invention).

### Container

A preferred container is flexible. Here the term "flexible" should preferably be understood as used in the packaging industry. A flexible container should preferably be understood as being a container that is non-rigid. A preferred flexible container is adapted and arranged to be at least partially deformed without damaging the container. The term "rigid" should preferably be understood as used in the packaging industry.

A preferred containers comprises at least 65 wt-%, more preferably at least 75 wt-%, and further preferably at least 85 wt-% of a film according to the invention. Here the wt-% is based on a total weight of the container. A film according to the invention comprises, more preferably consists of, a layered structure according to the invention.

In a preferred aspect of the invention, at least one or all, more preferably all, of the following comprise less than 3 wt-% of paper: the first sidewall, the further sidewall, the container. In a preferred aspect of the invention, at least one or all, more preferably all, of the following comprise less than 1 wt-% of paper: the first sidewall, the further sidewall, the container. In a preferred aspect of the invention, at least one or all, more preferably all, of the following comprise less than 3 wt-% of cardboard: the first sidewall, the further sidewall, the container. In a preferred aspect of the invention, at least one or all, more preferably all, of the following comprise less than 1 wt-% of cardboard: the first sidewall, the further sidewall, the container. In a preferred aspect of the invention, at least one or all, more preferably all, of the following are substantially free of paper: the first sidewall, the further sidewall, the container. In a preferred aspect of the invention, at least one or all, more preferably all, of the following are substantially free of cardboard: the first sidewall, the further sidewall, the container.

A "first surface" of the container should preferably be understood as a surface of the container which is intended to be in contact with an environment wherein said container is located. An example of a first surface is an outer surface of the container. A "further surface" of the container should preferably be understood as a surface of the container which is intended to be in contact with a product accommodated in the interior volume of the container, preferably a foodstuff. An example of a further surface is an inner surface of the container.

A container preferably comprises a lacquer layer superimposed on the first surface. A container may also comprise a printing layer superimposed on the first surface. Here "superimposed" should not be understood to necessarily imply that the lacquer layer and/or printing layer are directly in contact with the first surface. While this may be the case, there may also be one or more other layers arranged between the lacquer layer and/or printing layer, and the first surface.

A preferred container is a pouch, more preferably a spouted pouch. Examples of a spouted pouch include the CloverCap pouch and the CleanClic Connect pouch, both commercially available from SIG Group AG.

### Opening

In one preferred embodiment, the container is adapted and arranged to be opened by at least partially damaging the container, preferably by at least partially damaging the first sidewall, the further sidewall, or both. Examples of damaging the container include puncturing the container, and at least partially separating at least two sections of the containers, preferably at least two sections of the first sidewall, the further sidewall, or both. Examples of the at least partial separation of the at least two sections include cutting and tearing of the container.

Unless stated otherwise, an "opening" as herein should be understood as an opening that is adapted and arranged for discharging a product accommodated in the interior volume of the container. In another preferred embodiment, the container comprises an opening. A preferred opening has a cross-sectional surface area of 7.2 cm² or less, more preferably 5.2 cm² or less, even more preferably 3.2 cm² or less, and further preferably 2 cm² or less.

Unless stated otherwise, a "discharging means" should be understood as a means for discharging a product accommodated in the interior volume of the container. In a preferred embodiment, the container comprises a discharging means. A discharging means may be formed, for example, from a polymer or blend of polymers. A discharging means preferably comprises a polyolefin, more preferably polyethylene, and further preferably MDPE. A discharging means may be, e.g., attached on the first surface of the container or may be integrated into the container. Examples of a discharging means include a spout, a nozzle, and a straw (e.g., a drinking straw).

In a preferred embodiment, the container is adapted and arranged to be closable. Here closable should preferably be understood to mean that the container can be opened and closed at least once. In a preferred embodiment, the container comprises an opening and/or a discharging means that is adapted and arranged to be closable. A container that is adapted and arranged to be closable preferably comprises at least one closing means. Examples of a closing means, of a container that is adapted and arranged to be opened by at least partially damaging the container, include a section of adhesive and a press seal. Examples of a closing means, of a container that comprises an opening and/or discharging means, include a lid and a cap. A closing means preferably comprises a polyolefin, more preferably polyethylene, and further preferably HDPE.

In another preferred embodiment of the invention, the container comprises an opening that is adapted and arranged to be non-closable, e.g., an overcoated hole. For example, the opening is covered with a seal that, once broken (e.g., using a straw), is not adapted and arranged to be closable.

### Product

Examples of a "product", as used herein, include, but are not limited to, a household product, a foodstuff, and a cosmetic. A preferred product is a foodstuff.

A preferred product is a liquid product. The term "liquid product" as used herein should be understood to also include a semi-liquid product (e.g., a paste, a cream, a purée, a gel). A preferred liquid product is a liquid foodstuff.

The term "household product" should be understood to include any products that are suitable for use in a household, and which are preferably commonly used in a household. Examples of a household product include cleaning agents (such as detergents, washing powders, dishwashing liquid, and soap), adhesives (such as glues), and products for wood (such as wood oil and varnish). A preferred household product is a cleaning agent.

The term "liquid household product" should be understood to also include a semi-liquid household product (e.g., a paste, a cream, a gel). Examples of a liquid household product include liquid cleaning products such as detergents and dishwashing soaps.

The term "foodstuff" should be understood to include all kinds of food and drink known to those skilled in the art for human consumption and/or also animal consumption. Examples include cereals, milk and juice.

The term "liquid foodstuff" should be understood to also include a semi-liquid foodstuff (e.g., a paste, a cream, a purée, a gel). Preferred liquid foodstuffs have a non-solid form above 5 °C. Examples of a liquid foodstuff include milk, honey, yoghurt, tomato sauce, soups, and tomato paste.

The term "cosmetic" should preferably be understood as a product that is suitable to be applied to a body of a human and/or animal, with the aim of improving an appearance of the body. Examples of cosmetics include night creams and blush.

The term "liquid cosmetic" should be understood to also include a semi-liquid cosmetic (e.g., a paste, a cream, a gel). An example of a liquid cosmetic is a beauty cream.

### Layered structure

A preferred film and/or a preferred layered structure are unoriented. In a preferred embodiment of the invention, both the film and the layered structure are unoriented. Unoriented may also be referred to as non-oriented. The terms "oriented" and "unoriented" should be understood as used in the packaging industry. A film may be oriented by subjecting said film to one or more stretching steps, where said stretching step(s) may be performed in the machine direction, the transverse direction, or both. Said one or more stretching step are generally performed after the film has been produced. A layered structure may be oriented by subjecting said layered structure to one or more stretching steps, where said stretching step(s) may be performed in the machine direction, the transverse direction, or both. Said one or more stretching step are generally performed after the layered structure has been produced. In a preferred embodiment of the invention, the film and/or the layered structure, more preferably both, are not subjected to a stretching step.

A particularly preferred layered structure comprises at least seven layers. Here layered structures comprising, more preferably consisting, of seven, eight or nine layers are preferred. Here a layered structures consisting of seven or nine layers are more preferred than a layered structure consisting of eight layers.

In a preferred embodiment of the invention, the layered structure comprises at least nine layers, more preferably consists of nine layers. A layered structure comprising at least nine layers, more preferably consisting of nine layers, preferably has a layered sub-structure A that comprises, more preferably consists of, three layers. A layered structure comprising at least nine layers, more preferably consisting of nine layers, preferably has a layered sub-structure A that comprises, more preferably consists of, the layers A1, A2, and A3. A layered structure comprising at least nine layers, more preferably consisting of nine layers, preferably has a layered sub-structure C that comprises, more preferably consists of, three layers. A layered structure comprising at least nine layers, more preferably consisting of nine layers, preferably has a layered sub-structure C that comprises, more preferably consists of, the layers C1, C2, and C3.

In a preferred embodiment of the invention, the layered structure comprises at least eight layers, more preferably consists of eight layers. A layered structure comprising at least eight layers, more preferably consisting of eight layers, preferably has a layered sub-structure A that comprises, more preferably consists of, three layers. A layered structure comprising at least eight layers, more preferably consisting of eight layers, preferably has a layered sub-structure A that comprises, more preferably consists of, the layers A1, A2, and A3. A layered structure comprising at least eight layers, more preferably consisting of eight layers, preferably has a layered sub-structure C that comprises, more preferably consists of, two layers. A layered structure comprising at least eight layers, more preferably consisting of eight layers, preferably has a layered sub-structure C that does not comprise the layer C2. A layered structure comprising at least eight layers, more preferably consisting of eight layers, preferably has a layered sub-structure C that comprises, more preferably consists of, the layers C1 and C3.

In another preferred embodiment of the invention, the layered structure comprises at least seven layers, more preferably consists of seven layers. A layered structure comprising at least seven layers, more preferably consisting of seven layers, preferably has a layered sub-structure A that comprises, more preferably consists of, two layers. A layered structure comprising at least seven layers, more preferably consisting of seven layers, preferably has a layered sub-structure A that does not comprise the layer A3. A layered structure comprising at least seven layers, more preferably consisting of seven layers, preferably has a layered sub-structure A that comprises, more preferably consists of, the layers A1 and A2. A layered structure comprising at least seven layers, more preferably consisting of seven layers, preferably has a layered sub-structure C that comprises, more preferably consists of, two layers. A layered structure comprising at least seven layers, more preferably consisting of seven layers, preferably has a layered sub-structure C that does not comprise the layer C2. A layered structure comprising at least seven layers, more preferably consisting of seven layers, preferably has a layered sub-structure C that comprises, more preferably consists of, the layers C1 and C3.

A layered structure consisting of eight layers is less preferred than a layered structure consisting of seven layers and a layered structure comprising at least nine layers (e.g., consisting of nine layers).

### Layered sub-structures and layers

The term "layered sub-structure" is an auxiliary mental construct used herein to characterise a layered structure.

A preferred layered sub-structure comprises one or more polymers and/or one or more polymer blends, more preferably one or more polyolefins and/or one or more polyolefin blends. For example, a layered sub-structure may comprise two layers Z1 and Z2, wherein the layer Z1 comprises a first polymer and the layer Z2 comprises a blend of the first polymer and a second polymer. A layered sub-structure may comprise further constituents. The further constituents are preferably constituents which do not adversely affect the behaviour of the layered sub-structure. The further constituents may be, for example, inorganic compounds, such as metal salts, or further plastics, such as further thermoplastics.

A preferred layer comprises one or more polymers and/or one or more polymer blends, more preferably one or more polyolefins and/or one or more polyolefin blends. A layer may comprise further constituents. The further constituents are preferably constituents which do not adversely affect the behaviour of the layer. The further constituents may be, for example, inorganic compounds, such as metal salts, or further plastics, such as further thermoplastics.

Two "consecutive layers" of a layered sub-structure should be understood as any two layers of a layered sub-structure that are arranged to touch each other.

In a particularly preferred aspect of the invention, the layered sub-structure A and the layered sub-structure B are not laminated to each other. In another particularly preferred aspect of the invention, the layered sub-structure B and the layered sub-structure C are not laminated to each other. An example of lamination is separately producing the layered sub-structures A and B, bringing the layered sub-structures A and B into contact with each other, adhering the layered sub-structures A and B to each other by means of an adhesive, heat, pressure, or a combination thereof.

In a preferred aspect of the invention, the layered structure comprises no more than 4, more preferably no more than 3, and further preferably no more than 2 laminated layers. In a particularly preferred aspect of the invention, the layered structure comprises no laminated layers. An example of lamination is separately producing two layers X and Y, bringing the layers X and Y into contact with each other, adhering the layers X and Y to each other by means of an adhesive, heat, pressure, or a combination thereof.

A preferred layered sub-structure is unoriented. A layered sub-structure may be oriented by subjecting said layered sub-structure to one or more stretching steps, where said stretching step(s) may be performed in the machine direction, the transverse direction, or both. Said one or more stretching step are generally performed after the layered sub-structure has been produced. In a preferred aspect of the invention, at least one layered sub-structure, more preferably all layered sub-structures, are not subjected to a stretching step.

### Layered sub-structure A

A layered sub-structure A has a thickness A and/or a density A. In one preferred aspect of the invention, the layered sub-structure A consists of two layers (e.g., layers A1 and A2). In another preferred aspect of the invention, the layered sub-structure A comprises at least three layers (e.g., layers A1, A2, and A3). In yet another preferred aspect of the invention, the layered sub-structure A consists of three layers (e.g., layers A1, A2, and A3).

A preferred layered sub-structure A would be considered by the skilled person to impart at least one or all of the following properties to the layered structure, more preferably the film: a stiffness, a toughness, to function as a moisture barrier, a heat resistance, a combination of at least two thereof.

The layered sub-structure A, more preferably one or more layers of the layered sub-structure A, may comprise at least one or all of the following: an antiblock agent, a slip agent, an anti-static agent, a processing aid.

If a layered sub-structure A comprises layers A1 and A2, then the layer A1 is arranged further from the layered sub-structure B compared to the layer A2. If a layered sub-structure A comprises layers A1, A2, and A3, then the layer A1 is arranged further from the layered sub-structure B compared to the layer A2, and the layer A2 is arranged further from the layered sub-structure B compared to the layer A3.

A layer A1 of the layered sub-structure A has a thickness A1 and/or a density A1. A layer A2 of the layered sub-structure A has a thickness A2 and/or a density A2. A layer A3 of the layered sub-structure A has a thickness A3 and/or a density A3.

In a preferred embodiment R1 of the invention, a cross-sectional cut of the layered sub-structure A comprises the following layers, arranged in this order: a layer A1 and a layer A2, wherein the thickness A1 and the thickness A2 vary by 10 % or less, more preferably 7 % or less, even more preferably 4 % or less, and further preferably 2 % or less.

In a preferred embodiment R2 of the invention, a cross-sectional cut of the layered sub-structure A comprises the following layers, arranged in this order: a layer A1, a layer A2, and a layer A3, wherein at least one or all of the following applies:
a. the thickness A1 and the thickness A2 vary by at least 10 %, preferably at least 12 %, more preferably at least 14 %, and further preferably at least 16 %; preferably the variation between the thickness A1 and the thickness A2 is in the range from 10 to 20 %, more preferably from 12 to 18 %;
b. the thickness A1 and the thickness A3 vary by at least 25 %, preferably at least 30 %, more preferably at least 40 %, and further preferably at least 50 %; preferably the variation between the thickness A1 and the thickness A3 is in the range from 25 to 70 %, more preferably from 30 to 60 %;
c. the thickness A2 and the thickness A3 vary by at least 10 %, preferably at least 14 %, more preferably at least 18 %, and further preferably at least 22 %; preferably the variation between the thickness A2 and the thickness A3 is in the range from 10 to 35 %, more preferably from 20 to 30 %.

In an aspect of the embodiment R2, all possible combinations of the features a. to c. are preferred aspects of the embodiment. These combinations are *e.g.,* a; b; c; a+b; a+c; b+c; a+b+c. In a preferred aspect of the embodiment R2, the thickness A1 > the thickness A2. In a preferred aspect of the embodiment R2, the thickness A2 > the thickness A3. In a preferred aspect of the embodiment R2, the thickness A1 > the thickness A2 > the thickness A3.

In a preferred embodiment R3 of the invention, a cross-sectional cut of the layered sub-structure A comprises the following layers, arranged in this order: a layer A1, a layer A2, and a layer A3, wherein at least one or all of the following applies:
a. the thickness A1 and the thickness A2 vary by 10 % or less, more preferably 7 % or less, even more preferably 4 % or less, and further preferably 2 % or less;
b. the thickness A1 and the thickness A3 vary by 10 % or less, more preferably 7 % or less, even more preferably 4 % or less, and further preferably 2 % or less;
c. the thickness A2 and the thickness A3 vary by 10 % or less, more preferably 7 % or less, even more preferably 4 % or less, and further preferably 2 % or less.

In an aspect of the embodiment R3, all possible combinations of the features a. to c. are preferred aspects of the embodiment. These combinations are *e.g.,* a; b; c; a+b; a+c; b+c; a+b+c.

Embodiment R2 is more preferred than embodiment R3.

In a preferred embodiment R4 of the invention, a cross-sectional cut of the layered sub-structure A comprises, more preferably consists of, the following layers, arranged in this order: a layer A1 and a layer A2, wherein the thickness A1 and the thickness A2 vary by at least 10 %, preferably at least 12 %, more preferably at least 14 %, and further preferably at least 16 %; preferably the variation between the thickness A1 and the thickness A2 is in the range from 10 to 30 %, more preferably from 14 to 22 %. In the embodiment R4, the thickness A1 > the thickness A2.

Preferred embodiments R1, R2 and R3 are preferably for a layered structure that comprises at least nine layers, more preferably consists of nine layers. Preferred embodiments R1 and R4 are preferably for a layered structure that comprises at least seven layers, more preferably consists of seven layers.

In a preferred embodiment of the invention, the layered sub-structure A comprises two consecutive layers with different densities. For example, the layered sub-structure A has layers A1, A2, and optionally A3, wherein the layers A1 and A2 are arranged to touch each other, the layers A2 and A3 (if present) are arranged to touch each other, and wherein at least one or all of the following applies: the density A1 differs from the density A2 and/or the density A2 differs from the density A3 (if present).

In a preferred embodiment of the invention, the densities of any two consecutive layers of the layered sub-structure A differ. For example, the layered sub-structure A has layers A1, A2, and optionally A3, wherein the layers A1 and A2 are arranged to touch each other, the layers A2 and A3 (if present) are arranged to touch each other, and wherein the density A1 differs from the density A2 and the density A2 differs from the density A3 (if present).

In a preferred embodiment of the invention, the layered sub-structure A comprises two consecutive layers that comprise polyethylene with different densities, wherein a respective layer comprises at least 60 wt- %, more preferably at least 70 wt-%, and further preferably at least 80 wt-% of the respective polyethylene. For example, the layered sub-structure A has layers A1, A2, and optionally A3, wherein the layers A1 and A2 are arranged to touch each other, the layers A2 and A3 (if present) are arranged to touch each other, and wherein at least one or all of the following applies: the layer A1 comprises at least 80 wt-% HDPE and the layer A2 comprises at least 80 wt-% LDPE (preferably LLDPE), the layer A2 comprises at least 80 wt-% LDPE (preferably LLDPE) and the layer A3 (if present) comprises at least 80 wt-% HDPE.

In a preferred embodiment of the invention, any two consecutive layers of the layered sub-structure A comprise polyethylene with different densities, wherein a respective layer comprises at least 60 wt-%, more preferably at least 70 wt-%, and further preferably at least 80 wt-% of the respective polyethylene. For example, the layered sub-structure A has layers A1, A2, and A3, wherein the layers A1 and A2 are arranged to touch each other, the layers A2 and A3 are arranged to touch each other, and wherein at least one or all of the following applies: the layer A1 comprises at least 80 wt-% HDPE and the layer A2 comprises at least 80 wt-% LDPE (preferably LLDPE), the layer A2 comprises at least 80 wt-% LDPE (preferably LLDPE) and the layer A3 comprises at least 80 wt-% HDPE.

A preferred layered sub-structure A is unoriented.

### Layered sub-structure C

A layered sub-structure C has a thickness C and/or a density C. In one preferred aspect of the invention, the layered sub-structure C consists of two layers (e.g., the layers C1 and C3). In another preferred aspect of the invention, the layered sub-structure C comprises at least three layers (e.g., the layers C1, C2 and C3). In yet another preferred aspect of the invention, the layered sub-structure C consists of three layers (e.g., the layers C1, C2 and C3).

A preferred layered sub-structure C would be considered by the skilled person to impart at least one or all of the following properties to the layered structure, more preferably the film: a stiffness, a toughness, sealability, processability, a combination of at least two thereof.

The layered sub-structure C, more preferably one or more layers of the layered sub-structure C (e.g., the layer C3), may comprise at least one or all of the following: an antiblock agent, a slip agent, an anti-static agent, a processing aid.

In one preferred embodiment of the invention, the layered sub-structure C comprises less than 1 wt-%, more preferably less than 0.5 wt-%, and further preferably less than 0.3 wt-%, based on a total weight of the layered sub-structure C, of an anti-static agent. In another preferred embodiment of the invention, the layered sub-structure C does not comprise an anti-static agent.

If a layered sub-structure C comprises layers C1 and C3, then the layer C1 is arranged closer to the layered sub-structure B compared to the layer C3. If a layered sub-structure C comprises layers C1, C2, and C3, then the layer C1 is arranged closer to the layered sub-structure B compared to the layer C2, and the layer C2 is arranged closer the layered sub-structure B compared to the layer C3.

A layer C1 of the layered sub-structure C has a thickness C1 and/or a density C1. A layer C2 of the layered sub-structure C has a thickness C2 and/or a density C2. A layer C3 of the layered sub-structure C has a thickness C3 and/or a density C3.

In a preferred embodiment T1 of the invention, a cross-sectional cut of the layered sub-structure C comprises the following layers, arranged in this order: a layer C1 and a layer C2, wherein the thickness C1 and the thickness C2 vary by 10 % or less, more preferably 7 % or less, even more preferably 4 % or less, and further preferably 2 % or less.

In a preferred embodiment T2 of the invention, a cross-sectional cut of the layered sub-structure C comprises the following layers, arranged in this order: a layer C1, a layer C2 and a layer C3, wherein at least one or all of the following applies:
a. the thickness C1 and the thickness C2 vary by 18 % or less, more preferably 16 % or less, even more preferably 14 % or less, and further preferably 12 % or less; preferably the variation between the thickness C1 and the thickness C2 is in the range from 6 to 18 %, more preferably from 8 to 14 %;
b. the thickness C1 and the thickness C3 vary by at least 20 %, preferably at least 30 %, more preferably at least 35 %, and further preferably at least 40 %; preferably the variation between the thickness C1 and the thickness C3 is in the range from 25 to 60 %, more preferably from 40 to 50 %;
c. the thickness C2 and the thickness C3 vary by at least 30 %, preferably at least 40 %, more preferably at least 55 %, and further preferably at least 55 %; preferably the variation between the thickness C2 and the thickness C3 is in the range from 30 to 70 %, more preferably from 35 to 65 %.

In an aspect of the embodiment T2, all possible combinations of the features a. to c. are preferred aspects of the embodiment. These combinations are *e.g.,* a; b; c; a+b; a+c; b+c; a+b+c. In a preferred aspect of the embodiment T2, the thickness C3 > the thickness C1. In a preferred aspect of the embodiment T2, the thickness C3 > the thickness C2.

In a preferred embodiment T3 of the invention, a cross-sectional cut of the layered sub-structure C comprises the following layers, arranged in this order: a layer C1, a layer C2 and a layer C3, wherein at least one or all of the following applies:
a. the thickness C1 and the thickness C2 vary by 10 % or less, more preferably 7 % or less, even more preferably 4 % or less, and further preferably 2 % or less;
b. the thickness C1 and the thickness C3 vary by 10 % or less, more preferably 7 % or less, even more preferably 4 % or less, and further preferably 2 % or less;
c. the thickness C2 and the thickness C3 vary by 10 % or less, more preferably 7 % or less, even more preferably 4 % or less, and further preferably 2 % or less.

In an aspect of the embodiment T3, all possible combinations of the features a. to c. are preferred aspects of the embodiment. These combinations are *e.g.,* a; b; c; a+b; a+c; b+c; a+b+c.

Embodiment T2 is more preferred than embodiment T3.

In a preferred embodiment T4 of the invention, a cross-sectional cut of the layered sub-structure C comprises the following layers, arranged in this order: a layer C1 and a layer C3, wherein the thickness C1 and the thickness C3 vary by 10 % or less, more preferably 7 % or less, even more preferably 4 % or less, and further preferably 2 % or less.

In a preferred embodiment T5 of the invention, a cross-sectional cut of the layered sub-structure C comprises the following layers, arranged in this order: a layer C1 and a layer C3, wherein the thickness C1 and the thickness C3 vary by at least 20 %, more preferably by at least 40 %, and further preferably at least 80 %; preferably the variation between the thickness C1 and the thickness C3 is in the range from 20 to 200 %, more preferably from 40 to 120 %. In the embodiment T5, the thickness C1 < the thickness C3.

Preferred embodiments T1, T2 and T3 are preferably for a layered structure that comprises at least nine layers, more preferably consists of nine layers. Preferred embodiments T4 and T5 are preferably for a layered structure that comprises at least seven layers, more preferably consists of seven layers.

In a preferred embodiment of the invention, the layered sub-structure C comprises two consecutive layers with different densities. For example, the layered sub-structure C has layers C1 and C3, wherein the layers C1 and C3 are arranged to touch each other, and wherein the density C1 differs from the density C3. For example, the layered sub-structure C has layers C1, C2, and C3, wherein the layers C1 and C2 are arranged to touch each other, the layers C2 and C3 are arranged to touch each other, and wherein at least one or all of the following applies: the density C1 differs from the density C2 and/or the density C2 differs from the density C3. In a preferred aspect of this embodiment, the density C1 differs from the density C2, if present. In a preferred aspect of this embodiment, the density C1 differs from the density C3, if present.

In a preferred embodiment of the invention, the densities of any two consecutive layers of the layered sub-structure C differ. For example, the layered sub-structure C has layers C1, C2, and C3, wherein the layers C1 and C2 are arranged to touch each other, the layers C2 and C3 are arranged to touch each other, and wherein the density C1 differs from the density C2 and the density C2 differs from the density C3.

In a preferred embodiment of the invention, the layered sub-structure C comprises two consecutive layers that comprise polyethylene with different densities, wherein a respective layer comprises at least 60 wt- %, more preferably at least 70 wt-%, and further preferably at least 80 wt-% of the respective polyethylene. For example, the layered sub-structure C has layers C1 and C3, wherein the layers C1 and C3 are arranged to touch each other, and wherein the layer C1 comprises at least 80 wt-% HDPE and the layer C3 comprises at least 80 wt-% LDPE (preferably LLDPE). For example, the layered sub-structure C has layers C1, C2, and C3, wherein the layers C1 and C2 are arranged to touch each other, the layers C2 and C3 are arranged to touch each other, and wherein the layer C1 comprises at least 80 wt-% HDPE and the layer C2 comprises at least 80 wt-% LDPE (preferably LLDPE).

A preferred layered sub-structure C is unoriented.

### Layered sub-structure B

A layered sub-structure B has a thickness B and/or a density B. In one preferred aspect of the invention, the layered sub-structure comprises at least two layers (e.g., layers B1 and B2). In another preferred aspect of the invention, the layered sub-structure B consists of two layers (e.g., layers B1 and B2). In another preferred aspect of the invention, the layered sub-structure B comprises at least three layers (e.g., layers B1, B2, and B3). In yet another preferred aspect of the invention, the layered sub-structure B consists of three layers (e.g., layers B1, B2, and B3).

A preferred layered sub-structure B would be considered by the skilled person to impart at least one or all of the following properties to the layered structure, more preferably the film: to function as a gas barrier, to function as an adhesive, a combination thereof.

A preferred layered sub-structure B comprises at least one layer (herein referred to as a gas barrier layer) that is adapted and arranged to function as a gas barrier. It is preferred that the layer B2 is a gas barrier layer.

A preferred layered sub-structure B comprises at least one layer (herein referred to as an adhesive layer) that is adapted and arranged to function as an adhesive, more preferably as an adhesive between the layered sub-structure A and the layered sub-structure B, and even more preferably between a gas barrier layer and the layered sub-structure A. A preferred layered sub-structure B comprises at least one layer (herein referred to as an adhesive layer) that is adapted and arranged to function as an adhesive, more preferably as an adhesive between the layered sub-structure C and the layered sub-structure B, and even more preferably between a gas barrier layer and the layered sub-structure C. It is preferred that at least one or all of the following is an adhesive layer: B1, B3, or both B1 and B3.

In one preferred embodiment of the invention, the layer B2 is adapted and arranged to function as a gas barrier layer and an adhesive layer. In a preferred aspect of this embodiment, the thickness B2 of the layer B2 makes up at least 90 %, more preferably at least 95 %, and further preferably at least 99 % of the thickness B of layered sub-structure B.

If a layered sub-structure B comprises layers B1 and B2, then the layer B1 is arranged closer to the layered sub-structure A compared to the layer B2. If a layered sub-structure B comprises layers B1, B2, and B3, then the layer B1 is arranged closer to the layered sub-structure A compared to the layer B2, and the layer B2 is arranged closer the layered sub-structure A compared to the layer B3.

A layer B1 of the layered sub-structure B has a thickness B1 and/or a density B1. A layer B2 of the layered sub-structure B has a thickness B2 and/or a density B2. A layer B3 of the layered sub-structure B has a thickness B3 and/or a density B3.

A preferred layered sub-structure B comprises at least one layer (e.g., the layer B2) that comprises, more preferably consists of, at least one or all of the following: a polyamide (PA), a polyester, an ethylene vinyl alcohol copolymer (EVOH), a polyvinyl alcohol (PVOH), a polyvinylidene chloride (PVDC), a polyethylene terephthalate (PET), a polyvinylchloride, an acrylate-based polymer, a methacrylate-based polymer, a polyurethane (PU), a polyalkylimine, an acid-modified polyolefin, a polyetherester-amide block copolymer, or a combination of at least two thereof.

A preferred layered sub-structure B comprises at least one layer (e.g., the layer B2) that comprises at least 50 wt.-%, more preferably at least 60 wt.-%, even more preferably at least 70 wt.-%, even more preferably at least 80 wt.-%, even more preferably at least 90 wt.-%, and further preferably at least 95 wt.-%, based on a total weight of said at least one layer, of an EVOH. A preferred layered sub-structure B comprises at least one layer (e.g., the layer B2) that consists of an EVOH.

In a preferred embodiment of the invention, the layered sub-structure B comprises the layers B1, B2, B3, arranged in this order, wherein the thickness B1 and the thickness B3 vary by 10 % or less, more preferably 7 % or less, even more preferably 4 % or less, and further preferably 2 % or less.

A preferred layered sub-structure B is unoriented.

### Gas barrier layer

A preferred gas barrier layer is a gas barrier for at least one or all of the following: oxygen, nitrogen, carbon dioxide, or at least two thereof. A preferred gas barrier layer has an oxygen transmission rate (OTR) of less than 1.5, more preferably less than 1.2, even more preferably less than 0.9, and further preferably less than 0.6. A preferred gas barrier layer has an OTR that is in the range from 0.15 to 0.55, more preferably from 0.20 to 0.50, and further preferably from 0.25 to 0.45.

Gas barrier layers suitable for the present invention are well-known to the skilled person. An example of a gas barrier layers is an EVOH layer, which is commercially available under the tradenames of, e.g., Evasin^{™} (e.g., Evasin EV2951F) from SK functional polymer and Eval^{™} (e.g., Eval Y171B) from Kuraray Co., Ltd. and/or EVAL Europe N.V.

### Adhesive layer

An adhesive layer should preferably be understood as a layer that improves adhesion between layers adjacent to the adhesive layer. A preferred adhesive layer provides adhesion to an adjacent layer of at least 0.5 N/15mm, more preferably at least 0.7 N/15mm, and further preferably at least 0.8 N/15mm. An adhesive layer preferably comprises at least one polymer, more preferably at least one polymer resin.

Examples of an adhesive layer include a tie layer and an adhesion promoter layer. Suitable adhesive layers are well-known to the skilled person, and include products sold under the trade names of, e.g., Bynel^{™} (e.g., Bynel 41E1353B) available from The Dow Chemical Company, Plexar^{®} (e.g., Plexar PX3060, Plexar PX3236) available from LyondellBasell Industries, and Escor^{™} available from ExxonMobil Chemical.

### Polymer

A preferred polymer is a thermoplastic polymer, more preferably a polyolefin. A preferred polymer is easy to process due to good extrusion behaviour. A preferred polymer is obtained by chain polymerisation, in particular polyolefins, whereby cyclic olefin co-polymers (COC), polycyclic olefin co-polymers (POC), in particular polyethylene and polypropylene, are particularly preferred and polyethylene is especially preferred.

A preferred polymer has a melt flow index in the range from 0.1 to 20 g/10 min, more preferably from 0.3 to 10 g/10 min and further preferably from 0.5 to 5 g/10 min. A preferred polymer has a melting temperature in the range from 80 to 155 °C, more preferably from 90 to 145 °C, and further preferably from 95 to 135 °C.

A plastomer should preferably be understood as a polymer that combines qualities of elastomers and plastics, e.g., the rubber-like properties of elastomers with the processing ability of plastic.

### Polyolefin

A preferred polyolefin is a polyethylene (PE), a polypropylene (PP), or both. PE is more preferred than PP. A preferred polyethylene is one selected from the group consisting of an LDPE, an LLDPE, an mLLDPE, an HDPE, or a combination of at least two thereof. A HDPE should preferably be understood as having a density of 0.940 g/cm³ or more. A LDPE, a LLDPE, and an mLLDPE should preferably be understood as having a density of less than 0.940 g/cm³. A preferred HDPE has a density of at least 0.950 g/cm³ or more.

A Ziegler-Natta catalyst may be used to produce an LLDPE. A metallocene catalyst may be used to produce an mLLDPE.

A preferred polyethylene has a melt flow index in the range from 0.1 to 10 g/10 min, more preferably from 0.2 to 6 g/10 min, and further preferably from 0.5 to 3 g/10 min.

Commercially available polyolefins, suitable for the present invention, are well-known to the skilled person. Examples include polyolefins sold under the tradenames of: Lumicene^{®} (e.g., Lumicene M 6012 AP), available from TotalEnergies SE; Elite^{™} (e.g., Elite 5960g1) and Affinity^{™} (e.g., Affinity PL1860G, Affinity PL1880G), available from The Dow Chemical Company; Exceed^{™} (e.g., Exceed XP 8318ML) and LDPE LD (e.g., LDPE LD 150BW), available from ExxonMobil Chemical; Supeer^{™} (e.g., Supeer 7118NE) and Cohere^{™} (Cohere 8102), available from SABIC; Queo^{™} (e.g., Queo 0201FX) available from Borealis AG; and Lupolen (e.g., Lupolen 2420F) available from LyondellBasell Industries.

### First polyolefin

The first polyolefin preferably has a melt flow index in the range from 0.3 to 2.0 g/10 min, more preferably from 0.6 to 1.8 g/10 min, even more preferably from 0.8 to 1.6 g/10 min, and further preferably from 1.0 to 1.4 g/10 min. The melt flow index of the first polyolefin is measured according to the standard ASTM D1238-10.

The first polyolefin preferably has a secant modulus, MD, in the range from 600 to 1500 MPa, more preferably from 900 to 1200 MPa, even more preferably from 1030 to 1150 MPa, and further preferably from 1060 to 1120 MPa. The first polyolefin preferably has a secant modulus, TD, in the range from 600 to 1700 MPa, more preferably from 1410 to 1630 MPa, even more preferably from 1460 to 1580 MPa, and further preferably from 1490 to 1550 MPa. Here the secant modulus should be understood as a 2 % secant modulus. The secant modulus of the first polyolefin, both MD and TD, are measured according to the standard ASTM D882-18.

The first polyolefin preferably has an Elmendorf tear strength, MD, in the range from 18 to 42 g, more preferably from 23 to 37 g, and further preferably from 27 to 33 g. The first polyolefin preferably has an Elmendorf tear strength, TD, in the range from 38 to 62 g, more preferably from 43 to 57 g, and further preferably from 47 to 53 g. The Elmendorf tear strength of the first polyolefin, both MD and TD, are measured according to the standard ASTM D1922-15 (2020).

The density of the first polyolefin is measured according to the standard ASTM D792-20.

### Second polyolefin

The second polyolefin preferably has a melt flow index in the range from 0.1 to 4.0 g/10 min, more preferably from 0.3 to 3.0 g/10 min, even more preferably from 0.5 to 2.5 g/10 min, and further preferably from 0.65 to 2.00 g/10 min. The second polyolefin preferably has a melt flow index in the range from 0.3 to 1.2 g/10 min, more preferably from 0.5 to 1.0 g/10 min, and further preferably from 0.65 to 0.85 g/10 min. The melt flow index of the second polyolefin is measured according to the standard ASTM D1238-10.

The second polyolefin preferably has a tensile strength, MD, in the range from 17 to 36 MPa, preferably from 20 to 33 MPa, and further preferably from 23 to 29 MPa. The second polyolefin preferably has a tensile strength, TD, in the range from 15 to 33 MPa, more preferably from 18 to 30 MPa, and further preferably from 21 to 27 MPa. The tensile strength of the second polyolefin, both MD and TD, are measured according to the standard ISO 527-1, -3:2018.

The second polyolefin preferably has a tensile strain at break, MD, that is in the range from 220 to 380 %, more preferably from 250 to 350 %, and further preferably from 280 to 320 %. The second polyolefin preferably has a tensile strain at break, TD, that is in the range from 520 to 680 %, preferably from 550 to 650 %, and further preferably from 580 to 620 %. The tensile strain at break (also known as elongation at break) of the second polyolefin, both MD and TD, are measured according to the standard ISO 527-1, -3:2018.

The second polyolefin preferably has a dart drop impact that is in the range from 50 to 250 g, more preferably from 100 to 200 g, and further preferably from 125 to 175 g. The dart drop impact of the second polyolefin is measured according to the standard ASTM D1709-01, Method A.

The second polyolefin preferably has a failure energy that is in the range from 2 to 9 J/mm, more preferably from 3.5 to 7.5 J/mm, and further preferably from 4.5 to 6.5 J/mm. The failure energy of the second polyolefin is measured according to the standard DIN 53373:1970-09.

The density of the second polyolefin is measured according to the standard ISO 1183-1:2019.

### Third polyolefin

The third polyolefin preferably has a melt flow index in the range from 0.1 to 1.3 g/10 min, more preferably from 0.3 to 1.2 g/10 min, even more preferably from 0.6 to 1.1 g/10 min, and further preferably from 0.75 to 0.95 g/10 min. The melt flow index of the third polyolefin is measured according to the standard ASTM D1238-10.

The third polyolefin preferably has a secant modulus, MD, in the range from 150 to 390 MPa, more preferably from 170 to 370 MPa, and further preferably from 185 to 355 MPa. The third polyolefin preferably has a secant modulus, TD, in the range from 185 to 435 MPa, more preferably from 205 to 415 MPa, and further preferably from 220 to 400 MPa. Here the secant modulus should be understood as a 2 % secant modulus. The secant modulus of the third polyolefin, both MD and TD, are measured according to the standard ASTM D882-18.
A.] In a preferred aspect X, the third polyolefin has a secant modulus, MD, in the range from 150 to 240 MPa, more preferably from 170 to 220 MPa, and further preferably from 185 to 205 MPa. In a preferred aspect X, the third polyolefin has a secant modulus, TD, in the range from 185 to 275 MPa, more preferably from 205 to 255 MPa, and further preferably from 220 to 240 MPa. Here the secant modulus should be understood as a 2 % secant modulus.
B.] In a preferred aspect Y, the third polyolefin has a secant modulus, MD, in the range from 300 to 390 MPa, more preferably from 320 to 370 MPa, and further preferably from 335 to 355 MPa. In a preferred aspect Y, the third polyolefin has a secant modulus, TD, in the range from 340 to 435 MPa, more preferably from 360 to 415 MPa, and further preferably from 375 to 400 MPa. Here the secant modulus should be understood as a 2 % secant modulus.

The third polyolefin preferably has a tensile strength at yield, MD, that is in the range from 7.5 to 17.5 MPa, more preferably from 8.8 to 16.2 MPa, and further preferably from 9.5 to 15.6 MPa. The third polyolefin preferably has a tensile strength at yield, TD, that is in the range from 8.2 to 17.5 MPa, more preferably from 9.5 to 16.2 MPa, and further preferably from 10.2 to 15.6 MPa. The tensile strength at yield of the third polyolefin, both MD and TD, are measured according to the standard ASTM D882-18.
A.] In a preferred aspect X, the third polyolefin has a tensile strength at yield, MD, that is in the range from 7.5 to 12.5 MPa, more preferably from 8.8 to 11.2 MPa, and further preferably from 9.5 to 10.6 MPa. In a preferred aspect X, the third polyolefin has a tensile strength at yield, TD, that is in the range from 8.2 to 13.2 MPa, more preferably from 9.5 to 11.9 MPa, and further preferably from 10.2 to 11.4 MPa.
B.] In a preferred aspect Y, the third polyolefin has a tensile strength at yield, MD, that is in the range from 12.5 to 17.5 MPa, more preferably from 13.8 to 16.2 MPa, and further preferably from 14.4 to 15.6 MPa. In a preferred aspect Y, the third polyolefin has a tensile strength at yield, TD, that is in the range from 12.5 to 17.5 MPa, more preferably from 13.8 to 16.2 MPa, and further preferably from 14.4 to 15.6 MPa.

The third polyolefin preferably has a tensile elongation at break, MD, that is in the range from 350 to 690 %, more preferably from 410 to 640 %, and further preferably from 450 to 590 %. The third polyolefin preferably has a tensile elongation at break, TD, that is in the range from 420 to 780 %, more preferably from 480 to 730 %, and further preferably from 520 to 680 %. The tensile elongation at break of the third polyolefin, both MD and TD, are measured according to the standard ASTM D882-18.
A.] In a preferred aspect X, the third polyolefin has a tensile elongation at break, MD, that is in the range from 450 to 690 %, more preferably from 510 to 640 %, and further preferably from 550 to 590 %. In a preferred aspect X, the third polyolefin has a tensile elongation at break, TD, that is in the range from 540 to 780 %, more preferably from 600 to 730 %, and further preferably from 640 to 680 %.
B.] In a preferred aspect Y, the third polyolefin has a tensile elongation at break, MD, that is in the range from 350 to 590 %, more preferably from 410 to 540 %, and further preferably from 450 to 490 %. In a preferred aspect Y, the third polyolefin has a tensile elongation at break, TD, that is in the range from 420 to 660 %, more preferably from 480 to 610 %, and further preferably from 520 to 560 %.

The third polyolefin preferably has a film puncture resistance that is in the range from 1 to 35 J/cm³, more preferably from 5 to 30 J/cm³, and further preferably from 9 to 26 J/cm³.
A.] In a preferred aspect X, the third polyolefin has a film puncture resistance that is in the range from 10 to 35 J/cm³, more preferably from 15 to 30 J/cm³, and further preferably from 19 to 26 J/cm³.
B.] In a preferred aspect Y, the third polyolefin has a film puncture resistance that is in the range from 1 to 25 J/cm³, more preferably from 5 to 20 J/cm³, and further preferably from 9 to 16 J/cm³.
The third polyolefin preferably has a film puncture force in the range from 48 to 140 N, preferably from 63 to 125 N, and further preferably from 73 to 115 N.
A.] In a preferred aspect X, the third polyolefin has a film puncture force in the range from 70 to 140 N, preferably from 85 to 125 N, and further preferably from 95 to 115 N.
B.] In a preferred aspect Y, the third polyolefin has a film puncture force in the range from 48 to 118 N, preferably from 63 to 103 N, and further preferably from 73 to 93 N.

The third polyolefin preferably has a dart drop impact that is in the range from 1300 to 2700 g, more preferably from 1600 to 2400 g, and further preferably from 1800 to 2200 g. The dart drop impact of the third polyolefin is measured according to the standard ASTM D1709-01, Method A.
A.] In a preferred aspect X, the third polyolefin has a dart drop impact that is in the range from 1300 to 2500 g, more preferably from 1600 to 2200 g, and further preferably from 1800 to 2000 g.
B.] In a preferred aspect Y, the third polyolefin has a dart drop impact that is in the range from 1500 to 2700 g, more preferably from 1800 to 2400 g, and further preferably from 2000 to 2200 g.

The density of the third polyolefin is measured according to the standard ASTM D792-20.

### Fourth polyolefin

The fourth polyolefin preferably has a melt flow index in the range from 0.3 to 2.0 g/10 min, more preferably from 0.5 to 1.6 g/10 min, and further preferably from 0.7 to 1.2 g/10 min. The melt flow index of the fourth polyolefin is measured according to the standard ASTM D1238-10.
A.] In a preferred aspect X, the fourth polyolefin has a melt flow index in the range from 0.35 to 1.25 g/10 min, more preferably from 0.55 to 1.05 g/10 min, and further preferably from 0.70 to 0.90 g/10 min.
B.] In a preferred aspect Y, the fourth polyolefin has a melt flow index in the range from 0.50 to 1.50 g/10 min, more preferably from 0.70 to 1.30 g/10 min, and further preferably from 0.85 to 1.15 g/10 min.

The fourth polyolefin preferably has a secant modulus, MD, in the range from 33 to 100 MPa, more preferably from 40 to 93 MPa, and further preferably from 46 to 87 MPa. The fourth polyolefin preferably has a secant modulus, TD, in the range from 37 to 100 MPa, more preferably from 44 to 93 MPa, and further preferably from 50 to 87 MPa. Here the secant modulus should be understood as a 2 % secant modulus. The secant modulus of the fourth polyolefin, both MD and TD, are measured according to the standard ASTM D882-18.
A.] In a preferred aspect X, the fourth polyolefin has a secant modulus, MD, in the range from 65 to 100 MPa, more preferably from 72 to 93 MPa, and further preferably from 78 to 87 MPa. In a preferred aspect X, the fourth polyolefin has a secant modulus, TD, in the range from 65 to 100 MPa, more preferably from 72 to 93 MPa, and further preferably from 78 to 87 MPa. Here the secant modulus should be understood as a 2 % secant modulus.
B.] In a preferred aspect Y, the fourth polyolefin has a secant modulus, MD, in the range from 33 to 69 MPa, more preferably from 40 to 62 MPa, and further preferably from 46 to 56 MPa. In a preferred aspect Y, the fourth polyolefin has a secant modulus, TD, in the range from 37 to 73 MPa, more preferably from 44 to 66 MPa, and further preferably from 50 to 60 MPa. Here the secant modulus should be understood as a 2 % secant modulus.

The fourth polyolefin preferably has a tensile strength at yield, MD, that is in the range from 4.0 to 8.2 MPa, more preferably from 5.0 to 7.2 MPa, and further preferably from 5.5 to 6.4 MPa. The fourth polyolefin preferably has a tensile strength at yield, TD, that is in the range from 3.7 to 8.6 MPa, more preferably from 4.7 to 7.6 MPa, and further preferably from 5.2 to 6.8 MPa. The tensile strength at yield of the fourth polyolefin, both MD and TD, are measured according to the standard ASTM D882-18.
A.] In a preferred aspect X, the fourth polyolefin has a tensile strength at yield, MD, that is in the range from 4.0 to 8.0 MPa, more preferably from 5.0 to 7.0 MPa, and further preferably from 5.5 to 6.2 MPa. In a preferred aspect X, the fourth polyolefin has a tensile strength at yield, TD, that is in the range from 3.7 to 7.7 MPa, more preferably from 4.7 to 6.7 MPa, and further preferably from 5.2 to 5.9 MPa.
B.] In a preferred aspect Y, the fourth polyolefin has a tensile strength at yield, MD, that is in the range from 4.1 to 8.2 MPa, more preferably from 5.1 to 7.2 MPa, and further preferably from 5.6 to 6.4 MPa. In a preferred aspect Y, the fourth polyolefin has a tensile strength at yield, TD, that is in the range from 4.6 to 8.6 MPa, more preferably from 5.6 to 7.6 MPa, and further preferably from 6.1 to 6.8 MPa.

The fourth polyolefin preferably has a tensile elongation at break, MD, that is in the range from 280 to 660 %, more preferably from 320 to 620 %, and further preferably from 370 to 570 %. The fourth polyolefin preferably has a tensile elongation at break, TD, that is in the range from 350 to 750 %, more preferably from 420 to 680 %, and further preferably from 470 to 630 %. The tensile elongation at break of the fourth polyolefin, both MD and TD, are measured according to the standard ASTM D882-18.
A.] In a preferred aspect X, the fourth polyolefin has a tensile elongation at break, MD, that is in the range from 280 to 500 %, more preferably from 320 to 460 %, and further preferably from 370 to 410 %. In a preferred aspect X, the fourth polyolefin has a tensile elongation at break, TD, that is in the range from 350 to 650 %, more preferably from 420 to 580 %, and further preferably from 470 to 530 %.
B.] In a preferred aspect Y, the fourth polyolefin has a tensile elongation at break, MD, that is in the range from 440 to 660 %, more preferably from 480 to 620 %, and further preferably from 530 to 570 %. In a preferred aspect Y, the fourth polyolefin has a tensile elongation at break, TD, that is in the range from 450 to 750 %, more preferably from 520 to 680 %, and further preferably from 570 to 630 %.

The fourth polyolefin preferably has a film puncture resistance that is in the range from 1 to 45 J/cm³, more preferably from 5 to 40 J/cm³, and further preferably from 7 to 35 J/cm³.
A.] In a preferred aspect X, the fourth polyolefin has a film puncture resistance that is in the range from 15 to 45 J/cm³, more preferably from 20 to 40 J/cm³, and further preferably from 25 to 35 J/cm³.
B.] In a preferred aspect Y, the fourth polyolefin has a film puncture resistance that is in the range from 1 to 25 J/cm³, more preferably from 5 to 18 J/cm³, and further preferably from 7 to 13 J/cm³.

The fourth polyolefin preferably has a film puncture force in the range from 48 to 140 N, preferably from 63 to 125 N, and further preferably from 73 to 115 N.
A.] In a preferred aspect X, the fourth polyolefin has a film puncture force in the range from 30 to 85 N, preferably from 45 to 70 N, and further preferably from 52 to 63 N.
B.] In a preferred aspect Y, the fourth polyolefin has a film puncture force in the range from 21 to 76 N, preferably from 36 to 61 N, and further preferably from 43 to 54 N.

The fourth polyolefin preferably has a dart drop impact that is in the range from 400 to 1200 g, more preferably from 550 to 1050 g, and further preferably from 700 to 900 g. The dart drop impact of the fourth polyolefin is measured according to the standard ASTM D1709-01, Method B.

The density of the fourth polyolefin is measured according to the standard ASTM D792-20.

### Fifth polyolefin

The fifth polyolefin preferably has a melt flow index in the range from 0.3 to 2.0 g/10 min, more preferably from 0.5 to 1.6 g/10 min, and further preferably from 0.7 to 1.3 g/10 min. The melt flow index of the fifth polyolefin is measured according to the standard ASTM D1238-10.

The density of the fifth polyolefin is measured according to the standard ASTM D792-20.

### Antiblock, slip agents, anti-static agents, colouring means

Antiblock agents suitable for the present invention are well-known to the skilled person. Suitable antiblock agents may comprise organic materials, such as amide waxes, stearates, silicones, polytetrafluo-roethylenes, and erucamides. Suitable antiblock agents may comprise inorganic materials such as talc, calcium carbonate, natural silica and synthetic silica.

Slip agents suitable for the present invention are well-known to the skilled person. Suitable slip agents may comprise, e.g., one or more amides (such as a erucamide), and/or one or more siloxanes (such as polydimethylsiloxane), and/or one or more oleamides.

Anti-static agents suitable for the present invention are well-known to the skilled person. Suitable anti-static agents may comprise, e.g., long-chain aliphatic amines (optionally ethoxylated) and amides, quaternary ammonium salts (e.g., behentrimonium chloride or cocamidopropyl betaine), esters of phosphoric acid, polyethylene glycol esters, polyols, long-chain alkyl phenols, ethoxylated amines, glycerol esters, such as glycerol monostearate, and combinations of at least two thereof.

One or more colouring means may be added to one or more layers of the layered structure. Colouring means suitable for the present invention are well-known to the skilled person. A preferably colouring means comprises pigments. Suitable pigments are well-known to the skilled person. For example, titanium oxide may be used to obtain a white colour, carbon black to obtain a black colour and ultramarine blue to obtain a blue colour. An example of a colouring means is a colour masterbatch. If the layered structure comprises at least one colouring means, it is preferred to add said colouring means to one or more layers that comprise at least 75 wt-% of one or more polyolefins that have a density of less than 0.940 g/cm³. For example, said colouring means is added to one or more layers that comprise at least 75 wt-% of an LDPE, more preferably an LLDPE. For example, the colouring means is added to the layers A2, C2, or both A2 and C2.

### Preferred embodiments

An embodiment E1 of the invention is a container for accommodating a product, wherein the container comprises
a. an interior volume adapted and arranged for accommodating the product,
b. a first sidewall, wherein the first sidewall comprises
   i. a first edge,
   ii. a first surface and a further surface, opposite the first surface, with the further surface facing the interior volume,
   iii. a film, wherein
      A. the film makes up at least 30 %, preferably at least 50 %, more preferably at least 70 %, and further preferably at least 90 % of a thickness of the first sidewall,
      B. the film comprises a layered structure;
c. a further sidewall, opposite the first sidewall, wherein the further sidewall comprises a first edge connected to the first edge of the first sidewall;

wherein a cross-sectional cut of the layered structure comprises at least five layers, wherein the at least five layers are arranged in
   A.] a layered sub-structure A comprising at least two layers,
   B.] a layered sub-structure B comprising at least one layer, and
   C.] a layered sub-structure C comprising at least two layers,
   wherein
   I. the layered sub-structure B is arranged between the layered sub-structure A and the layered sub-structure C, and
   II. the layered sub-structure C is arranged closer to the interior volume of the container compared to the layered sub-structure A;
wherein
   the first sidewall comprises less than 20 wt-%, preferably less than 15 wt-%, more preferably less than 10 wt-%, and further preferably less than 5 wt-% paper, cardboard, or both, and a thickness A of the layered sub-structure A is less than or equal to, preferably less than, a thickness C of the layered sub-structure C.

In a preferred aspect of the embodiment E1, the film comprises at least seven layers, more preferably at least nine layers. In another preferred aspect of the embodiment E1, the film consists of seven layers or nine layers.

An embodiment E2 of the invention is a container for accommodating a product, wherein the container comprises
a. an interior volume adapted and arranged for accommodating the product,
b. a first sidewall, wherein the first sidewall comprises
   i. a first edge,
   ii. a first surface and a further surface, opposite the first surface, with the further surface facing the interior volume,
   iii. a film, wherein
      A. the film makes up at least 30 %, preferably at least 50 %, more preferably at least 70 %, and further preferably at least 90 % of a thickness of the first sidewall,
      B. the film comprises a layered structure;
c. a further sidewall, opposite the first sidewall, wherein the further sidewall comprises a first edge connected to the first edge of the first sidewall;

wherein a cross-sectional cut of the layered structure comprises at least five layers, wherein the at least five layers are arranged in
   A.] a layered sub-structure A comprising at least two layers that have different densities,
   B.] a layered sub-structure B comprising at least one layer, and
   C.] a layered sub-structure C comprising at least two layers that have different densities,
   wherein
   I. the layered sub-structure B is arranged between the layered sub-structure A and the layered sub-structure C, and
   II. the layered sub-structure C is arranged closer to the interior volume of the container compared to the layered sub-structure A;
wherein
   the first sidewall comprises less than 20 wt-%, preferably less than 15 wt-%, more preferably less than 10 wt-%, and further preferably less than 5 wt-% paper, cardboard, or both.

In a preferred aspect of the embodiment E2, the film comprises at least seven layers, more preferably at least nine layers. In another preferred aspect of the embodiment E2, the film consists of seven layers or nine layers.

The 1^{st} to 55^{th} embodiments, as well as their preferred aspects, are also preferred embodiments and preferred aspects of the embodiments E1 and E2.

### Production of layered structure

A layered structure and/or a film according to the invention can be produced using any means which the skilled person deems suitable. This includes extrusion, lamination, and a combination thereof. A layered structure and/or a film according to the invention is preferably produced using an extrusion method, more preferably a co-extrusion method. In one particularly preferred embodiment of the invention, a layered structure and/or a film according to the invention is produced using a method that does not include a lamination step. Suitable extrusion methods and devices for producing a layered structure and/or a film according to the invention are well-known to the skilled person. Any extrusion method and device which the skilled person deems suitable for the invention may thus be used. For example, the layered structure and/or film can be produced using blown-film extrusion and/or cast-film extrusion. Devices suitable for extrusion are commercially available from, e.g., Windmöller & Hölscher KG, such as the VAREX II 9-layer coextrusion line, Reifenhäuser GmbH & Co. KG, and Hosokawa Alpine AG.

### TEST METHODS

The test methods which follow were utilized within the context of the invention. Unless stated otherwise, the measurements were conducted at an ambient temperature of 23 °C, an ambient air pressure of 100 kPa (0.986 atm) and a relative air humidity of 50 %. When measuring the properties of the film (or layered structure), samples are taken from ungrooved and unfolded regions of the film (or layered structure).

### Composition

The chemical composition of a layered structure and a film is determined as follows. A 1 cm x 1 cm sample of the film (or layered structure) is cut perpendicular to the layers of the film (or layered structure). The sample is then prepared using a Tegramin-25 polisher, commercially available from Struers. Irregularities and deformations are removed from the surface of the sample by the polishing step. Once polished, the sample is irradiated with an infrared light using a Spotlight 400 FT-IR Imaging System, commercially available from Perkin Elmer Inc. The transmittance of each layer of the film (or layered structure) is measured as a function of wavenumber (i.e., a graph showing the transmittance as a function of wavenumber is generated). If the graph shows a peak at 1377 cm⁻¹ then polyethylene (HDPE, LLDPE, LDPE) is present. If the graph shows a peak in the range from 1000 to 1200 cm⁻¹ and/or in the range from 3300 to 3500 cm⁻¹, then EVOH is present. A peak at 1462 cm⁻¹ indicates the presence of polypropylene.

### Density

Unless specified otherwise, density is measured according to the standard D792-20.

### Layer thickness

A thickness of a layer, layered structure and film is measured perpendicular to said layer, layered structure and film, respectively.

A sample of the film (or layered structure) having an area of 0.5 cm² is provided. A cross-sectional cut through the sample is then made using a Leica Microtome 3050 S. Prior to making the cross-sectional cut, the sample is flash frozen with liquid nitrogen and stabilized at -30 °C using a temperature control system commercially available from Linkam Scientific Instruments Ltd. The thicknesses of the individual layers, of the sample, is then measured using an Olympus BX51 Light Microscope. The microscope generates an image of the cross-section, which is then analysed using the software provided with the microscope. The boundaries of a layer are marked in the image, with the software determining the thickness of said layer.

### Ratio of parameters

The ratio of a parameter P1 to a parameter P2 is determined as follows:$Ratio = P 1 / P 2 .$

Here the parameters P1 and P2 can be, e.g., thicknesses of two layered sub-structures.

### Melt flow index

Unless specified otherwise, melt flow index (also known as a melt flow rate and melt index) is measured according to the standard ASTM D1238-10.

### Melting temperature

The melting temperature of a layer is determined in accordance with standard DIN EN ISO 11357-3:2011(E), which references a DSC method. The DSC method used is described below.

### Differential scanning calorimetry (DSC)

DSC measurements are performed as follows.

### Sample preparation for differential scanning calorimetry (DSC):

A sample of at least 1.0 mg is weighed with a Kern 770 precision balance from Kern & Sohn GmbH, Balingen, Germany. For this purpose, the empty DSC pan is tared on the balance, followed by the weighing of the sample. Subsequently, the pan is closed with a lid on a press. The lid should have a small hole, so that the pan will not be deformed during DSC measurement. The sample and the crucible must not be deformed during the DSC measurement. Care must be taken not to touch the sample or the crucible by bare hand during sample preparation.

### Differential scanning calorimetry (DSC):

The differential scanning calorimetry is conducted according to standard DIN EN ISO 11357-1, here version 11357-1:2010-03. The following details apply in addition to what is given in the standard or deviating from the standard. The calorimeter is a DSC 8000 from PerkinElmer Inc. In the DSC-method, the heat flow is measured as a function of the temperature. The graph of the measurement therefore shows the heat flow (dQ/dt) on the ordinate axis as a function of the temperature (T) on the abscissa axis. The endothermic direction is always upwards, as in note 2 to section 3.1 of DIN EN ISO 11357-1:2010-03. According to section 4.2 of standard DIN EN ISO 11357-1:2010-03, a heat flow differential calorimetry is carried out. In this case, the reference crucible is always empty and, according to section 3.10 of DIN EN ISO 11357-1:2010-03, the reference position is always used for the temperature. Nevertheless, a reference crucible must always be used. The flushing gas used (sections 5.5 and 9.1.2 of DIN EN ISO 11357-1:2010-03 is nitrogen. Prior to each measurement, the DSC instrument is calibrated according to sections 8.2 to 8.4 of DIN EN ISO 11357-1:2010-03 using the calibrating substances (section 3.2 and 5.4 of DIN EN ISO 11357-1:2010-03) indium and zinc (as per annex C of DIN EN ISO 11357-1:2010-03). As recommended in 8.4.2 of DIN EN ISO 11357-1:2010-03, the heat calibration is carried out using indium as calibrating substance. The crucible is fed to the calorimeter via the auto-sampler. Details about the sample are entered via the editor (name, weight, method of measurement, position on the auto sampler, memory location). The measurements are carried out in dynamic mode (3.9.5 of DIN EN ISO 11357-1:2010-03). In this case the sample is pre-treated by first heating from 35 °C to 160 °C at 20 °C/min and maintaining the temperature for 1 minute. Thereafter, the sample is cooled to 35 °C at 2 °C/min. After that, the measurement process is carried out with a heating rate of 20°C/min up to 160°C.

### Evaluation:

For the evaluation of the measurement, only the second heating curve described above is used. The curve can be selected in the menu under *"curves"* and there *"heat flow".* The selected curve is coloured in blue, the rest of the data is red and can be removed via *"remove curve".* Then, the melting temperature can be determined from the data via selecting *"peak area"* in the menu *"calc".* The peak is marked and then evaluated automatically. The sample has exactly as many melting temperatures as its second heating curve has endothermic peaks. If a sample has more than one peak, i.e., more than one melting temperature, the one of these at the lowest temperature is meant in case of any reference herein to a single melting temperature.

### Oxygen transmission rate (OTR)

The OTR of the film is determined according to the standard ASTM D3985-05 (2010). A sample of film to be examined is taken from an ungrooved and unfolded region of the film. The area of the sample is 50 cm². The measurements are conducted at an ambient temperature of 23°C and an ambient air pressure of 100 kPa (0.986 atm). The test instrument is an Ox-Tran 2/22, commercially from Amatek Mocon. The measurement is conducted without compressed air compensation. For the measurement, samples at ambient temperature are used. In addition, 0 % oxygen and a relative air humidity of 90 % is used on one side (a first outer surface) of the sample, and 100 % oxygen and 50 % relative air humidity is used on the opposite side (a further outer surface) of the sample. Further settings and factors that affect the measurement - especially the rest of those listed under point 16 of the standard ASTM D3985-05 (2010) - are defined by the instrument used and the proper use and maintenance thereof according to the manufacturer's handbook.

The OTR of a layered structure, a layered sub-structure, and a layer is determined as described above for the film.

### Tensile strength and elongation at break

Unless specified otherwise, tensile strength, both MD and TD, are measured according to the standard ISO 527-1, -3:2018. Unless specified otherwise, elongation at break (also known as tensile strain at break or tensile elongation at break), both MD and TD, are measured according to the standard ISO 527-1, - 3:2018.

### Drop test

To test a specific layered structure, 100 pouches that have a first sidewall, a further sidewall, and a bottom made from the layered structure is provided (i.e., the sidewalls and the bottom are made from a film that, in turn, is made from the layered structure). Each pouch is then filled with a nominal volume of a liquid product. The pouches are then dropped from a height of 1.2 m. 50 pouches are dropped such that these pouches land on their bottoms. The other 50 pouches are dropped such that these pouches land on either the first sidewall or the further sidewall. A pouch fails the drop test if any damage to the sidewalls or bottom, such as a tear, is observed. The number of undamaged pouches indicates the success of the drop test.

In the above, the nominal volume is defined as the volume for which the pouch is designed. For example, if a pouch is designed to hold 100 ml of a liquid or paste, 100 ml is defined as the nominal volume of said pouch.

### Film puncture force

Unless specified otherwise, film puncture force (also referred to as average puncture force) is measured according to the standard ASTM D5748-95:2019.

### Dart drop impact

Unless specified otherwise, dart drop impact is measured according to the standard ASTM D1709-01, Method A

The invention is now illustrated by non-limiting examples and exemplifying embodiments.

### FIGURES

### List of figures

The figures serve to exemplify the present invention and should not be viewed as limiting the invention. The figures are not drawn to scale.
- Fig. 1A:: schematic illustration showing a cross-sectional cut of a first embodiment of a layered structure according to the invention.
- Fig. 1B:: schematic illustration showing a cross-sectional cut of a second embodiment of a layered structure according to the invention.
- Fig. 2A:: a schematic illustration of a cross-section of a container, according to the invention, viewed from the side.
- Fig. 2B:: schematic illustration of a container, according to the invention, viewed from the front.
- Fig. 3:: flow diagram of a method, according to the invention, for producing a film according to the invention.
- Fig. 4:: flow diagram of a method, according to the invention, for producing a container according to the invention.

### Description of figures

The figures are described in more detail below.

### Fig. 1A

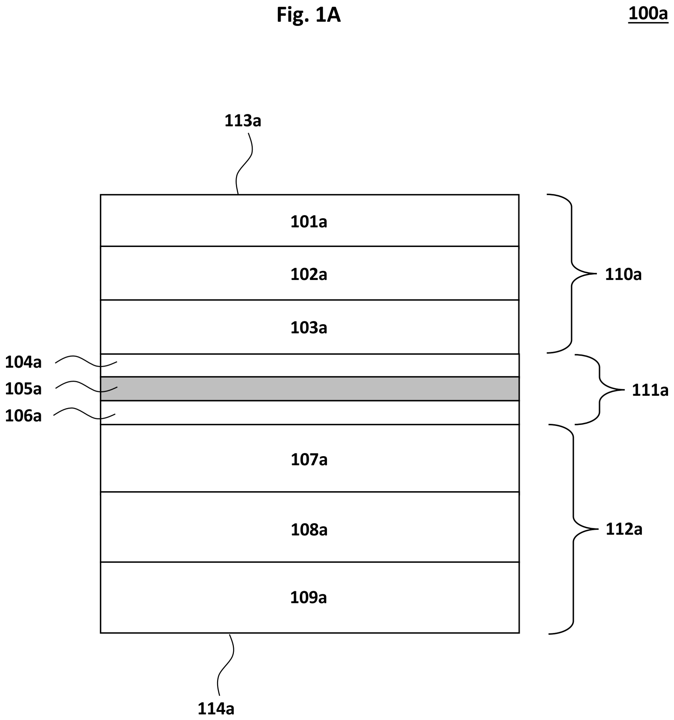

Fig. 1A is a schematic illustration showing a cross-sectional cut of a first embodiment of a layered structure 100a according to the invention. The cross-sectional cut is made perpendicular to the layers of the layered structure. As can be seen in Fig. 1A, the layered structure has nine layers 101a to 109a.

The layer 101a comprises at least 88 wt-% of an HDPE (e.g., a first polyolefin). Optionally, the layer 101a may comprise an LLDPE (e.g., a second polyolefin) in an amount of 10 wt-% or less. The layer 102a, arranged in contact with the layer 101a, is made from an LLDPE (e.g., a third polyolefin). The layer 103a, arranged in contact with the layer 102a, is made from an HDPE (e.g., the first polyolefin).

The layers 104a and 106a both comprise a maleic anhydride modified PE. The layers 104a and 106a are also adapted and arranged to function as adhesive layers (e.g., tie layers). Arranged between the layers 104a and 106a is a layer 105a. The layer 105a is made from an ethylene vinyl alcohol copolymer (EVOH).

The layer 105a is arranged in contact with the layers 104a and 106a. The layer 104a is also arranged in contact with the layer 103a, while the layer 106a is arranged in contact with the layer 107a.

The layer 107a is made from a HDPE (e.g., the first polyolefin). The layer 108a, arranged in contact with the layer 107a, is made from an LLDPE (e.g., the third polyolefin). The layer 109a, arranged in contact with the layer 108a, comprises a blend of LLDPEs (e.g., a blend of the second polyolefin, the third polyolefin, and a fourth polyolefin). The blend of LLDPEs make up at least 90 wt-% of the layer 109a. The layer 109a may further comprises additives such as an antiblock masterbatch and a slip masterbatch.

The layered structure 100a may comprise colour masterbatch added to one or more of the layers of the layered structure 100a. For example, colour masterbatch may be added to the layer 102a, the layer 108a, or both layers 102a and 108a.

The layers 101a, 102a, and 103a form part of a layered sub-structure A 110a. The layer 101a is an example of a layer A1, the layer 102a is an example of a layer A2, and the layer 103a is an example of a layer A3. The layers 104a, 105a, and 106a form part of a layered sub-structure B 111a. The layer 104a is an example of a layer B1, the layer 105a is an example of a layer B2, and the layer 106a is an example of a layer B3. The layers 107a, 108a, and 109a form part of a layered sub-structure C 112a. The layer 107a is an example of a layer C1, the layer 108a is an example of a layer C2, and the layer 109a is an example of a layer C3.

Fig. 1A also shows that the layered sub-structure A 110a has a thickness A that is less than a thickness C of the layered sub-structure C 112a. While this is preferred, this is not a requirement. The thicknesses A and C are both larger than a thickness B of the layered sub-structure B 111a. While this is preferred, this is not a requirement.

In one preferred embodiment, the layer 102a has a thickness that is larger than the thickness of the layer 101a and/or the thickness of the layer 103a, more preferably both the layers 101a and 103a. In one preferred embodiment, the layer 109a has a thickness that is larger than the thickness of the layer 107a and/or the thickness of the layer 108a, more preferably both the layers 107a and 108a. In one preferred embodiment, the thickness of the layer 107a and/or the thickness of the layer 108a, preferably both layers 107a and 108a, is larger than the thickness of the layer 101a. In one preferred embodiment, the thickness of the layer 107a and/or the thickness of the layer 108a, preferably both layers 107a and 108a, is larger than the thickness of the layer 102a. In one preferred embodiment, the thickness of the layer 107a and/or the thickness of the layer 108a, preferably both layers 107a and 108a, is larger than the thickness of the layer 103a. In one preferred embodiment, the thickness of the layer 107a and the thickness of the layer 108a are larger than the thicknesses of the layers 101a, 102a, and 103a. It is preferred that the thicknesses of the layers 104a and 106a vary by less than 10 %.

The layered structure 100a has a first surface 113a that is formed by a surface of the layer 101a, and a further surface 114a, that is formed by a surface of the layer 109a. The layered structure 100a is also asymmetric around, e.g., the layer 105a. For example, when moving from the layer 105a towards the first surface 113a the layer arrangement differs to the layer arrangement when moving from the layer 105a towards the further surface 114a. This asymmetry is in the composition of the layers 101a to 109a. This asymmetry is preferably also in the thickness of the layers 101a to 109a.

### Fig. 1B

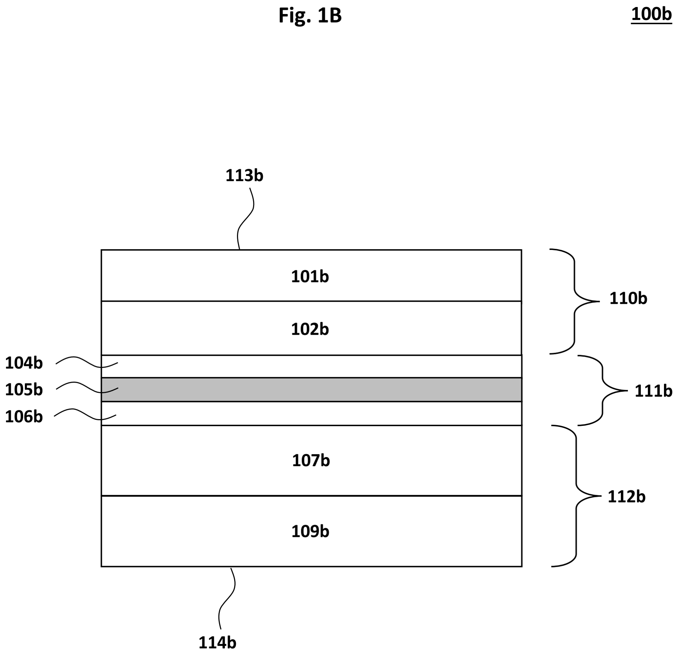

Fig. 1B is a schematic illustration showing a cross-sectional cut of a second embodiment of a layered structure 100b according to the invention. The cross-sectional cut is made perpendicular to the layers of the layered structure. As can be seen in Fig. 1B, the layered structure has seven layers 101b, 102b, 104b, 105b, 106b, 107b, and 109b.

The layer 101b comprises at least 95 wt-% of an HDPE (e.g., a first polyolefin). The layer 102b, arranged in contact with the layer 101b, comprises at least 98 wt-% of an LLDPE (e.g., a third polyolefin).

The layers 104b and 106b both comprise a maleic anhydride modified PE. The layers 104b and 106b are also adapted and arranged to function as adhesive layers (e.g., tie layers). Arranged between the layers 104b and 106b is a layer 105b. The layer 105b is made from an ethylene vinyl alcohol copolymer (EVOH). The layer 105b is arranged in contact with the layers 104b and 106b. The layer 104b is also arranged in contact with the layer 102b, while the layer 106b is arranged in contact with the layer 107b.

The layer 107b comprises at least 98 wt-% of a HDPE (e.g., the first polyolefin). The layer 109b, arranged in contact with the layer 107b, comprises a blend of LLDPEs (e.g., a blend of the third polyolefin and a fifth polyolefin). The blend of LLDPEs make up at least 97 wt-% of the layer 109b. The layer 109b may further comprises additives such as an antiblock masterbatch and a slip masterbatch.

The layered structure 100b may comprise colour masterbatch added to one or more of the layers of the layered structure 100b. For example, colour masterbatch may be added to the layer 102b.

The layers 101b and 102b form part of a layered sub-structure A 110b. The layer 101b is an example of a layer A1 and the layer 102b is an example of a layer A2. The layers 104b, 105b, and 106b form part of a layered sub-structure B 111b. The layer 104b is an example of a layer B1, the layer 105b is an example of a layer B2, and the layer 106b is an example of a layer B3. The layers 107b and 109b form part of a layered sub-structure C 112b. The layer 107b is an example of a layer C1 and the layer 109b is an example of a layer C3.

Fig. 1B also shows that the layered sub-structure A 110b has a thickness A that is less than a thickness C of the layered sub-structure C 112b. While this is preferred, this is not a requirement. The thicknesses A and C are both larger than a thickness B of the layered sub-structure B 111b. While this is preferred, this is not a requirement.

In one preferred embodiment, the layer 102b has a thickness that is less than the thickness of the layer 101b. In one preferred embodiment, the layer 109b has a thickness that is larger than the thickness of the layer 107b. In one preferred embodiment, the thickness of the layer 107b is less than the thickness of the layer 101b. In one preferred embodiment, the thicknesses of the layers 102b and 107b vary by less than 10 %. It is preferred that the thicknesses of the layers 104b and 106b vary by less than 10 %.

The layered structure 100b has a first surface 113b that is formed by a surface of the layer 101b, and a further surface 114b, that is formed by a surface of the layer 109b. The layered structure 100b is also asymmetric around, e.g., the layer 105b. For example, when moving from the layer 105b towards the first surface 113b the layer arrangement differs to the layer arrangement when moving from the layer 105b towards the further surface 114b. This asymmetry is in the composition of the layers 101b to 109b. This asymmetry is preferably also in the thickness of the layers 101b to 109b.

### Figs 2A and 2B

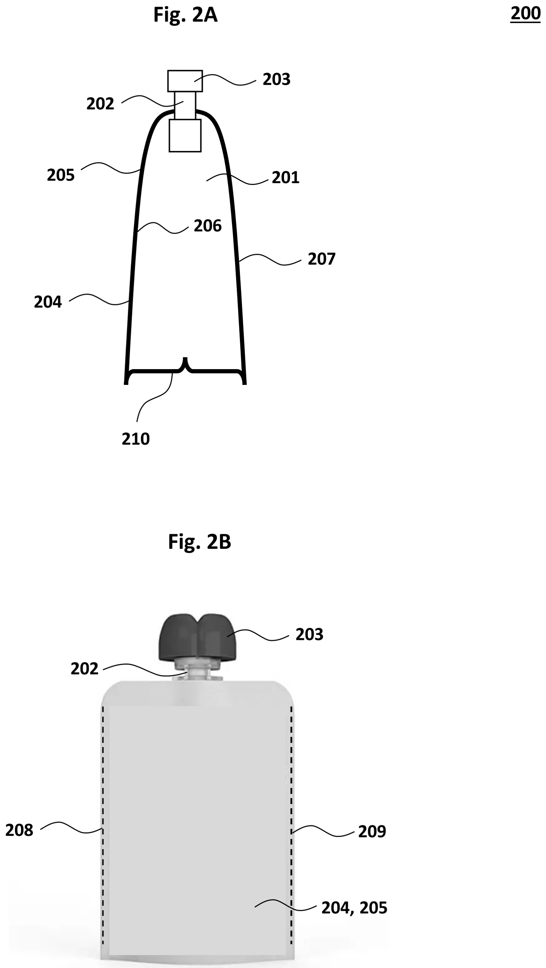

Fig. 2A is a schematic illustration of a cross-section of a container 200, according to the invention, viewed from the side. The container 200 has an interior volume 201 formed between a first sidewall 204, a further sidewall 207 (the sidewalls 204 and 207 partially enclose the interior volume 201) and a bottom 210. The container 200 also has a spout 202 (discharging means) for discharging the contents of the container 200.

The discharging means 202 can be closed by a closing means 203, such as a screw cap. Using the first sidewall 204 as an example, the first sidewall 204 has a first surface 205 and a further surface 206 (opposite the first surface 205). The further surface 206 faces the interior volume 201.

The first sidewall 204 and the further sidewall 207 is made from a film that has the layered structure 100a or the layered structure 100b, as described in Figs 1A and 1B, respectively. The layer 109a/109b of the layered structure 100a/100b is arranged closer to the interior volume 201 compared to the layer 101a/101b. The further surface 114a/114b of the layered structure 100a/100b forms the further surface 206 of the container 200 (i.e., the layer 109a/109b forms the further surface 206). While the first surface 113a/113b of the layered structure 100a/100b may form the first surface 205 of the container 200 (i.e., the layer 101a/101b forms the first surface 205), the container 200 may also have, e.g., a coating layer comprising a lacquer and a print layer comprising ink superimposed on the first surface 113a/113b of the layered structure 100a/100b. In the latter embodiment a surface of either of the print layer or the coating layer may form the first surface 205 of the container 200.

Although the film above is described using the layered structures 100a and 100b of Figs 1A and 1B, respectively, it should be noted that the layered structures 100a and 100b are examples of a layered structure according to the invention. Other layered structure according to the invention can also be used for the film.

Fig. 2B is a schematic illustration of a container 200, according to the invention, viewed from the front. The first sidewall 204 and the further sidewall are connected at a first edge 208 and a further edge 209 to form the interior of the container 200.

### Figs 3 and 4

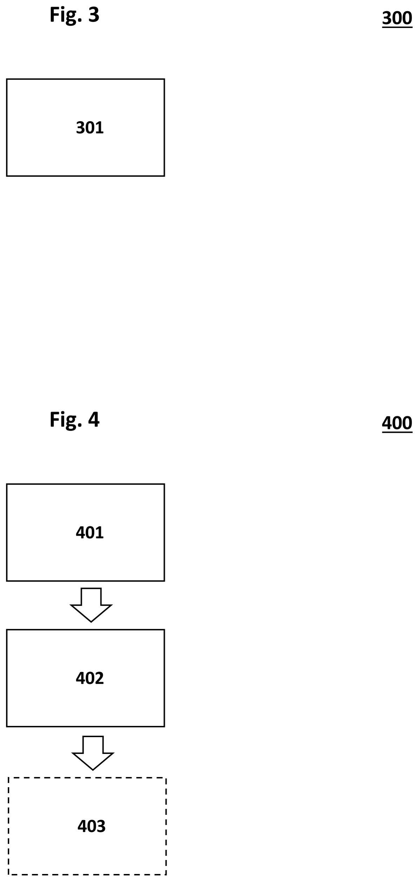

Fig. 3 is a flow diagram of a method 300, according to the invention, for producing a film, also according to the invention. In step 301, at least seven layers are simultaneously extruded, using blown-film extrusion, to obtain a film comprising at least seven layers. The at least seven layers are arranged in the following layered sub-structures:
A. a layered sub-structure A comprising at least two layers A1 and A2, and optionally a layer A3, wherein
   i. the layer A1 comprises an HDPE with a density of a least 0.940 g/cm³,
   ii. the layer A2 comprises an LLDPE with a density of less than 0.940 g/cm³,
   iii. the layer A3, if present, comprises an HDPE with a density of a least 0.940 g/cm³;
B. a layered sub-structure B comprising layers B1, B2, and B3, wherein
   i. the layers B1 and B3 are adhesive layers (also known as tie layers),
   ii. the layer B2 comprises an EVOH,
C. a layered sub-structure C comprising at least two layers C1 and C3, and optionally a layer C2, wherein
   i. the layer C1 comprises an HDPE with a density of a least 0.940 g/cm³,
   ii. the layer C2, if present, comprises an LLDPE with a density of less than 0.940 g/cm³,
   iii. the layer C3 comprises at least one LLDPE with a density of less than 0.940 g/cm³.

The layered sub-structure B is arranged between the layered sub-structure A and the layered sub-structure C.

Fig. 4 is a flow diagram of a method 400, according to the invention, for producing a container, also according to the invention. In step 401 a film according to the invention is provided. The film may be obtained using a method as described above for Fig. 3. In step 402, the film is folded to produce a first sidewall and a further sidewall of the container, wherein the sidewalls at least partially define (e.g., enclose) an interior volume of the container. At least one edge (e.g., a first edge) of the first sidewall is connected to at least one edge of the further sidewall. In optional step 403, a discharging means, such as a spout, is integrated into the container.

### EXAMPLES

The invention is illustrated further by way of examples. The invention is not restricted to the examples.

In the following examples, spouted pouches (containers) with sidewalls made from films with different layered structures were investigated. The same layered structure is used for both the first and further sidewalls of a respective pouch, as well as the bottom of the respective pouch. The films consist of the layered structures, where a respective film makes up at least 97 % of a thickness of the sidewalls and bottom of a respective pouch.

The layers C1 to C3 are arranged closer to the interior volume a respective container, compared to the layers A1 to A3. The layers B1 and B3 are adhesive layers (tie layers) made from a maleic acid anhydride modified polyethylene. The layer B2 is made from EVOH.

### Example 1

The different layered structures used for Example 1, as well as their effect on the properties of the spouted pouches, are provided in Table 1. Unless indicated otherwise, the layers comprise 100 wt-% of the component indicated in Table 1. Where indicated, additives in the form of slip agents, antiblock agents, and colour pigments make up around 6.5 wt-% of a layer. The thickness of the layer A1 varies by less than 5 % between the examples in Table 1. This also applies for the layers A2 to C3.

Examples 1.1 to 1.5 are particularly preferred embodiments of the invention.

The technical effects in Table 1 are as follows:
- Puncture resistance: a pouch's resistance to being punctured by a sharp object. A "+" indicates a larger puncture resistance, while a "-" indicates a smaller puncture resistance. It is desired to increase the puncture resistance.
- Drop test: a pouch's resistance to damage when dropped / when pressure is applied to the pouch. A "+" indicates a larger resistance to damage, while a "-" indicates a smaller resistance to damage. It is desired to increase the resistance to damage.

- Heat resistance: a pouch's resistance to damage when heat is applied to the pouch, and in particular an outer surface of the pouch. A "+" indicates a larger resistance, while a "-" indicates a smaller resistance. It is desired to increase the resistance to damage due heat.
- Sealing temperature: the temperature required to seal the pouch by connecting sections of the inner surface of the pouch with each other and applying heat and pressure to these sections. A "+" indicates that a lower temperature is required, while a "-" indicates that a higher temperature is required. Furthermore, "++++" indicates a lower temperature compared to, e.g., "+", while "- ---" indicates a higher temperature compared to "-". It is desired to reduce the temperature required for sealing.
- Stiffness: the stiffness of the pouch. A "+" indicates a larger stiffness, while a "-" indicates a lower stiffness. It is generally desired to increase the stiffness.
- OTR: the oxygen transmission rate of through the sidewalls of the pouch. A "+" indicates a lower OTR, while a "-" indicates a larger OTR. Furthermore, "++++" indicates a lower OTR compared to, e.g., "+", while "----" indicates a larger OTR compared to "-". It is desired to reduce the OTR.

**Table 1**

| **Example** | **1.1** | **1.2** | **1.3** | **1.4** | **1.5** | **1.6** | **1.7** | **1.8** | **1.9** | **1.10** |
|---|---|---|---|---|---|---|---|---|---|---|
| | | | | | | | | | | |

| **Layers** | | | | | | | | | | |
|---|---|---|---|---|---|---|---|---|---|---|
| A1 | HDPE | HDPE | HDPE | HDPE | HDPE | LLDPE | HDPE | LLDPE | HDPE | HDPE |
| A2 | LLDPE | LLDPE | LLDPE | LLDPE | LLDPE | HDPE | LLDPE | LLDPE + additives | HDPE | HDPE |
| A3 | Not present | Not present | HDPE | HDPE | Not present | Not present | Not present | Not present | Not present | Not present |
| B1 | Adhesive | Adhesive | Adhesive | Adhesive | Adhesive | Adhesive | Adhesive | Adhesive | Adhesive | Adhesive |
| B2 | EVOH | EVOH | EVOH | EVOH | EVOH | EVOH | EVOH | EVOH | EVOH | EVOH |
| B3 | Adhesive | Adhesive | Adhesive | Adhesive | Adhesive | Adhesive | Adhesive | Adhesive | Adhesive | Adhesive |
| C1 | HDPE | HDPE | HDPE | HDPE | HDPE | HDPE | LLDPE + additives | HDPE | LLDPE | HDPE |
| C2 | LLDPE + additives | LLDPE | LLDPE + additives | LLDPE | LLDPE | LLDPE + additives | HDPE | HDPE | LLDPE + additives | LLDPE |
| C3 | Not present | LLDPE + additives | Not present | LLDPE + additives | HDPE | Not present | Not present | Not present | Not present | HDPE |
| C4 | Not present | Not present | Not present | Not present | LLDPE + additives | Not present | Not present | Not present | Not present | LLDPE + additives |
| | | | | | | | | | | |

| Technical effects | | | | | | | | | | |
|---|---|---|---|---|---|---|---|---|---|---|
| Puncture resistance | +++ | ++++ | +++ | ++++ | +++ | +++ | +++ | ++ | ++ | + |
| Drop test | +++ | +++ | +++ | ++++ | ++++ | +++ | ++ | ++ | ++ | ++ |
| Heat resistance | +++ | +++ | ++++ | ++++ | +++ | - | +++ | - | ++++ | ++++ |
| Sealing Temperature | ++++ | ++++ | ++++ | ++++ | ++++ | ++++ | - | - | ++++ | ++++ |
| Stiffness | ++ | ++ | +++ | +++ | +++ | ++ | +++ | + | + | ++++ |
| OTR | ++ | +++ | ++ | +++ | ++++ | ++ | ++ | +++ | + | ++++ |

### Example 2

In Example 2, pouches with layered structures according to Example 1.4 are provided. For the present example, the thickness of the layered sub-structures A and C are varied as shown in Table 2. The layered sub-structure A has a thickness A while the layered sub-structure C has a thickness C. The thicknesses of the layered structures vary by less than 5 % between Examples 2.1 to 2.3. Furthermore, the thicknesses of the layered sub-structures B also vary by less than 8 % between Examples 2.1 to 2.3.

**Table 2**

| **Example** | **2.1** | **2.2** | **2.3** |
|---|---|---|---|
| | | | |

| **Set-up** | | | |
|---|---|---|---|
| Thickness | A<C | A = C | A>C |
| | | | |

| **Technical effects** | | | |
|---|---|---|---|
| OTR | +++ | ++ | + |

The technical effects in Table 2 are the same as given in Table 1 above.

Repeating Examples 2.1 to 2.3 using a pouch with a layered structure according to any of the Examples 1.1 to 1.3 and 1.5 to 1.10, results similar to those shown in Table 2 are obtained.

### REFERENCE LIST

- 100a,b: Layered structure
- 101a,b: Layer A1
- 102a,b: Layer A2
- 103a,: Layer A3
- 104a,b: Layer B1
- 105a,b: Layer B2
- 106a,b: Layer B3
- 107a,b: Layer C1
- 108a,: Layer C2
- 109a,b: Layer C3
- 110a,b: Layered sub-structure A
- 111a,b: Layered sub-structure B
- 112a,b: Layered sub-structure C
- 113a,b: First surface of layered structure
- 114a,b: Further surface of layered structure

- 200: Container
- 201: Interior volume
- 202: Spout
- 203: Cap
- 204: First sidewall
- 205: First surface of first sidewall/container
- 206: Further surface of first sidewall/container
- 207: Further sidewall
- 208: First edge
- 209: Further edge
- 210: Bottom

## Claims

1. A container (200) for accommodating a product, wherein the container (200) comprises
a. an interior volume (201) adapted and arranged for accommodating the product,
b. a first sidewall (204), wherein the first sidewall (204) comprises
i. a first edge (208),
ii. a first surface (205) and a further surface (206), opposite the first surface (205), with the further surface (206) facing the interior volume (201),
iii. a film, wherein
A. the film makes up at least 30 % of a thickness of the first sidewall (204),
B. the film comprises a layered structure (100a,b);
c. a further sidewall (207), opposite the first sidewall (204), wherein the further sidewall (207) comprises a first edge connected to the first edge (208) of the first sidewall (204);
wherein a cross-sectional cut of the layered structure (100a,b) comprises at least five layers, wherein the at least five layers are arranged in
A.] a layered sub-structure A (110a,b) comprising at least two layers (101a,b; 102a,b),
B.] a layered sub-structure B (111a,b) comprising at least one layer (105a,b), and
C.] a layered sub-structure C (112a,b) comprising at least two layers (107a,b; 109a,b),
wherein
I. the layered sub-structure B (111a,b) is arranged between the layered sub-structure A (110a,b) and the layered sub-structure C (112a,b), and
II. the layered sub-structure C (112a,b) is arranged closer to the interior volume (201) of the container (200) compared to the layered sub-structure A (110a,b);
wherein
the first sidewall (204) comprises less than 20 wt-% paper, cardboard, or both, and
a thickness A of the layered sub-structure A (110a,b) is less than or equal to a thickness C of the layered sub-structure C (112a,b).

2. The container (200) according to claim 1, wherein at least one or all of the following applies:
a. the layered sub-structure A (110a,b) comprises at least one polyolefin;
b. the layered sub-structure B (111a,b) comprises at least one or all of the following: a polyamide, an ethylene/vinyl alcohol copolymer (EVOH), a polyvinyl alcohol (PVOH), a polyvinylidene chloride (PVDC);
c. the layered sub-structure C (112a,b) comprises at least one polyolefin.

3. The container (200) according to any of the preceding claims, wherein at least one or all of the following applies:
a. a ratio of the thickness C to the thickness A is in the range from 0.5 to 2.9;
b. a ratio of the thickness A to a thickness B, of the layered sub-structure B (111a,b), is in the range from 0.6 to 2.9;
c. a ratio of the thickness C to the thickness B, of the layered sub-structure B (111a,b), is in the range from 1.3 to 4.5.

4. The container (200) according to any of the preceding claims, wherein at least one or all of the following applies:
a. the thickness A is in the range from 23 to 51 µm;
b. the thickness B is in the range from 10 to 34 µm;
c. the thickness C is in the range from 41 to 79 µm.

5. The container (200) according to any of the preceding claims, wherein at least one or all of the following applies:
a. the thickness A is in the range from 17 to 45 % of the thickness of the layered structure (100a,b);
b. the thickness B is in the range from 7 to 30 % of the thickness of the layered structure (100a,b);
c. the thickness C is in the range from 33 to 68 % of the thickness of the layered structure (100a,b);
subject to the limitation that the sum of the thickness A, the thickness B, and the thickness C does not exceed 100 %.

6. The container (200) according to any of the preceding claims, wherein the following applies:
a. the layered sub-structure A (110a,b) comprises at least two layers (101a,b; 102a,b) that have different densities, and
b. the layered sub-structure C (112a,b) comprises at least two layers (107a,b; 109a,b) that have different densities.

7. The container (200) according to any of the preceding claims, wherein at least one or all of the following applies:
a. at least one layer (101a,b), of the at least two layers, of the layered sub-structure A (110a,b) has a density that is larger than the density of at least one layer (109a,b), of the at least two layers, of the layered sub-structure C (112a,b);
b. at least one layer (102a,b), of the at least two layers, of the layered sub-structure A (110a,b) has a density that is less than the density of at least one layer (107a,b), of the at least two layers, of the layered sub-structure C (112a,b).

8. A method for producing a film, comprising the step of
I./ at least partially simultaneously extruding at least five layers to obtain a film that has a layered structure (100a,b), wherein, in a cross-sectional cut of the film, the at least five layers are arranged in the following layered sub-structures of said layered structure, in this order:
A. a layered sub-structure A (110a,b) comprising at least two layers A1 (101a,b) and A2 (102a,b), wherein
i. the layer A1 (101a,b) comprises a polyolefin with a density of a least 0.940 g/cm³,
ii. the layer A2 (102a,b) comprises a polyolefin with a density of less than 0.940 g/cm³;
B. a layered sub-structure B (111a,b) comprising at least one layer (105a,b), and wherein the layered sub-structure B (111a,b) comprises at least one or all of the following: a polyamide, an ethylene/vinyl alcohol copolymer, a polyvinyl alcohol, a polyvinylidene chloride;
C. a layered sub-structure C (112a,b) comprising at least two layers C1 (107a,b) and C3 (109a,b), wherein
i. the layer C1 (107a,b) comprises a polyolefin with a density of a least 0.940 g/cm³,
ii. the layer C3 (109a,b) comprises a polyolefin with a density of less than 0.940 g/cm³;
wherein the layered sub-structure B (111a,b) is arranged between the layered sub-structure A (110a,b) and the layered sub-structure C (112a,b).

9. A method for producing a container for accommodating a product, comprising the steps of:
I./ providing a film obtained according to claim 8;
II./ using the film to produce at least a first sidewall of the container.

10. A container obtainable by the method according to claim 9.

11. A container according to any of the preceding claims 1 to 7, and 10, wherein the container is at least partially accommodated in a receptacle.

12. A container according to any of the preceding claims 1 to 7, and 10 to 11, wherein the container is at least partially filled with a product.

13. A film obtainable according to claim 8.

14. A use of a film according to claim 13 for producing a container for accommodating a product.

15. A use of a container according to any of the preceding claims 1 to 7, and 10 to 11 for accommodating a product.
